# EUROPÄISCHE PATENTSCHRIFT

(11) **EP 4 449 000 B1**
(45) Veröffentlichungstag und Bekanntmachung des Hinweises auf die Patenterteilung: **13.08.2025**
(21) Anmeldenummer: 22821936.6
(22) Anmeldetag: 22.11.2022
(51) Int. Cl.: F16L 11/04, F16L 55/165, E03F 3/06, E02D 29/12, E03F 5/02

(54) **AUSKLEIDUNGSSCHLAUCH ZUR SANIERUNG VON DEFEKTEN KANALSCHÄCHTEN EINSCHLIESSLICH BERME UND GERINNE SOWIE VERFAHREN ZUR HERSTELLUNG EINES SOLCHEN SOWIE VERFAHREN ZUR AUSKLEIDUNG EINES DEFEKTEN KANALSCHACHTS**
LINING TUBE FOR RESTORING DEFECTIVE SEWER SHAFTS INCLUDING A BERM AND A CHANNEL, AND METHOD FOR PRODUCING SAME, AND METHOD FOR LINING A DEFECTIVE SEWER SHAFT
TUBE DE REVÊTEMENT POUR RESTAURER DES BOUCHES D'ÉGOUT DÉFECTUEUSES COMPRENANT UNE BERME ET UN CANAL, SON PROCÉDÉ DE FABRICATION ET PROCÉDÉ DE REVÊTEMENT D'UNE BOUCHE D'ÉGOUT DÉFECTUEUSE

(30) Priorität: 13.12.2021 DE 102021006141
(43) Veröffentlichungstag der Anmeldung: 23.10.2024
(73) Patentinhaber: Brandenburger Liner GmbH & Co. KG, 76829 Landau (DE)
(72) Erfinder: BUSS, Johannes, 77749 Hohberg (DE)
(74) Vertreter: Kesselhut, Wolf
(86) Internationale Anmeldenummer: PCT/EP2022/082847
(87) Internationale Veröffentlichungsnummer: WO 2023/110332

(56) Entgegenhaltungen:
- EP-A1- 2 857 188
- WO-A1-95/04646
- DE-A1- 102011 103 001
- US-A- 5 106 440

## Beschreibung

Die Erfindung betrifft einen Auskleidungsschlauch zur Sanierung von defekten Kanalschächten einschließlich Berme und Gerinne sowie ein Verfahren zur Herstellung eines solchen sowie zur Auskleidung eines defekten Kanalschachts gemäß dem Oberbegriff von Anspruch 1, 7 und 10.

Auf dem Gebiet der grabenlosen Sanierung von defekten Rohrleitungen, wie z.B. defekten Abwasserkanälen, werden zunehmend Auskleidungsschläuche eingesetzt, die eine oder mehrere Lagen aus einem mit einem flüssigem Reaktionsharz getränkten Glasfaserlaminat aufweisen, welches in Form von überlappend gewickelten oder gelegten Faserbändern um einen Innenfolienschlauch herum angeordnet ist. Auf der Außenseite ist das Laminat von einem Außenfolienschlauch umgeben, der einen Austritt von schädlichen Substanzen, insbesondere von Styrol, aus dem Reaktionsharz in das Erdreich verhindert. Die Auskleidungsschläuche, die auch als Inliner bezeichnet werden, werden in einen zu sanierenden Kanal eingezogen, nach dem Einziehen an ihren Enden mit Hilfe von Packern verschlossen und mittels Druckluft expandiert und durch Licht einer UV-Strahlungsquelle, oder alternativ durch Einleiten von Heißdampf, ausgehärtet.

Ein zuvor genannter Auskleidungsschlauch sowie ein Verfahren zur Herstellung eines solchen sind beispielsweise aus der WO-A 95/04646 bekannt.

Kanalschächte müssen in gleicher Weise saniert werden wie Rohrleitungen, Es bietet sich an, dafür die gleichen Verfahren einzusetzen. Allerdings haben Kanalschächte gegenüber Rohrleitungen, wie Abwasserrohren, die Besonderheit, dass diese vertikal verlaufen und in ihrem Durchmesser nicht konstant sind. Kanalschächte, oder allgemein Schachtbauwerke haben in der Regel einen kürzeren oberen Abschnitt, der sich von der oberen Schachtöffnung aus in vertikaler Richtung nach unten erstreckt, einen sich daran anschließenden konischen Übergangsabschnitt und einen sich an den konischen Übergangsabschnitt anschließenden längeren unteren, üblicherweise zylindrischen Abschnitt mit einem großem Durchmesser, der sich bis zur Sohle des Schachtes hinab erstreckt. Der untere zylindrische Schachtabschnitt hat z.B. einen Durchmesser von 1.000mm, der sich über den konischen Übergangsabschnitt hinweg auf einen Durchmesser von z.B. 600mm im Bereich der oberen Öffnung verjüngt. Da Kanalschächte oder allgemein Schachtbauwerke keiner Norm unterliegen, existieren eine Vielzahl von unterschiedlichen Ausführungsformen, die sich in ihrer Länge, ihrem Durchmesser und der Konusform unterscheiden.

Für die Sanierung von Kanalschächten wird seit langem die gleiche Technik eingesetzt, die auch bei der Sanierung der zuvor beschriebenen Rohrleitungen und Kanäle zum Einsatz gelangt. Obgleich die senkrechte Ausrichtung der Kanalschächte für den Einsatz eines zuvor beschriebenen Auskleidungsschlauchs für Rohrleitungen weniger problematisch ist, ergibt sich beim Einbau die Schwierigkeit, dass der Durchmessersprung zwischen dem oberen und dem unteren Kanalabschnitt sehr groß ist und von herkömmlichen Linern, die eine maximale Dehnung von bis zu 10 % des Grunddurchmessers erlauben, nicht abgedeckt werden kann, ohne dass die Gefahr besteht, dass der empfindliche Innenfolienschlauch und auch die Wicklung des Glasfaserbandes überdehnt und dadurch beschädigt wird.

Aus der WO 2013/139892 A1 ist es in diesem Zusammenhang bekannt, Auskleidungsschläuche für die Sanierung von Kanalschächten auf einem Wickeldorn mit endlicher Länge zu wickeln, der eine positive Form des Schachtbauwerks mit einem konischen Übergangsabschnitt ist. Obgleich die in der Weise hergestellten Auskleidungsschläuche eine Sanierung von Kanalschächten mit vergleichsweise großen Durchmessersprüngen von mehr als 50 % erlauben, besitzen diese die Unzulänglichkeit, dass für jede Ausführungsform ein individueller Wickeldorn gefertigt werden muss, was die Herstellungskosten extrem erhöht.

Obgleich es mit einem solchen Auskleidungsschlauch für Kanalschächte möglich ist, die beiden zylindrischen Teile sowie den konischen Teil eines Kanalschachtes zu sanieren, ist es zur vollständigen Sanierung eines Kanalschachts in der Regel ebenfalls erforderlich, die sogenannte Berme und auch das Gerinne des Kanalschachtes auszukleiden. Dies wird üblicherweise in weiteren Arbeitsschritten, z.B. mithilfe von Formteilen oder flüssigen Beschichtungen, von Hand durchgeführt, was sehr arbeitsintensiv ist und zu entsprechend hohen Kosten führt.

Demgemäß ist es eine Aufgabe der vorliegenden Erfindung, einen Auskleidungsschlauch zu schaffen, welcher es ermöglicht, Kanalschächte mit jeweils unterschiedlichen Innendurchmessern einschließlich der Berme und dem Gerinne mit ein und demselben Auskleidungsschlauch zu sanieren.

Diese Aufgabe wird erfindungsgemäß durch einen Auskleidungsschlauch mit den Merkmalen von Anspruch 1 gelöst.

Eine weitere Aufgabe der Erfindung ist es, ein Verfahren zu schaffen, mit welchem sich ein solcher Auskleidungsschlauch fertigen lässt.

Diese Aufgabe wird erfindungsgemäß durch ein Verfahren mit den Merkmalen von Anspruch 7 gelöst.

Eine abermals weitere Aufgabe der Erfindung ist es, ein Verfahren zu schaffen, mit dem ein solcher Auskleidungsschlauch in einem defekten Kanalschacht installiert werden kann.

Diese Aufgabe wird erfindungsgemäß durch ein Verfahren mit den Merkmalen von Anspruch 10 gelöst.

Weitere Merkmale der Erfindung sind in den Unteransprüchen beschrieben.

Nach dem der Erfindung zugrunde liegenden Gedanken ist ein im Querschnitt kreisförmiger, zylindrischer Auskleidungsschlauch so ausgestaltet, dass er sich beim Expandieren an die unterschiedlichen Durchmesser eines Kanalschachts anpassen kann. Dies ermöglicht es, den Auskleidungsschlauch, wie in der WO-A 95/04646 beschrieben, als endlosen Schlauch zu fertigen, so dass dieser vom Anwender vor Ort auf der Baustelle in mehrere einzelne Teilschläuche zerteilt werden kann, die jeweils eine der Tiefe des zu sanierenden Kanalschachts entsprechende Länge besitzen.

Der Auskleidungsschlauch umfasst hierzu in gleicher Weise wie ein Auskleidungsschlauch zur Sanierung von herkömmlichen horizontal verlaufenden Kanälen und Rohrleitungen einen Innenfolienschlauch, auf welchem wenigstens eine Lage eines schraubenförmig gewickelten oder alternativ auch umfänglich gelegten Faserbandes, insbesondere eines Glasfaserbandes oder Glasfaservlieses angeordnet ist, welches mit einem flüssigen Reaktionsharz getränkt ist, das durch UV-Licht ausgehärtet werden kann. Darauf folgt bevorzugt ein in Längsrichtung orientiertes Glasfaserband (Längszugband), welches die Zugkräfte beim Einbau des nachfolgend auch als "Liner" bezeichneten Auskleidungsschlauchs in einen Kanalschacht abträgt.

Um die durch das harzgetränkte Faserband geformte, umfänglich geschlossene Schicht herum ist bevorzugt ein Außenfolienschlauch angeordnet, der eine der Lage aus Fasermaterial zugewandte Vlieslage aufweisen kann, die auf eine zur Bildung des Außenfolienschlauchs verwendete Kunststofffolie aufkaschiert ist. Um den Außenfolienschlauch herum, der bevorzugt aus einer Mehrlagenfolie mit einer Styrolbarriere gefertigt ist, insbesondere eine PE-PA-PE Folie, auf deren innenliegende PE-Lage die Vliesschicht durch einen Schmelzvorgang aufkaschiert ist, ist bevorzugt eine reißfeste, bevorzugt gewebeverstärkte Schutzfolie angeordnet, die einen Aufbau und Materialeigenschaften wie eine LKW-Plane oder eine reißfeste Verpackungsfolie besitzt, und deren Längsränder über die Länge des Auskleidungsschlauchs hinweg z.B. durch Klebeband oder einen aufgeschweißten oder aufgeklebten elastischen Folienabschnitt verbunden sind. Dieser elastische Folienabschnitt, der auch durch einen Streifen Klebeband mit einer entsprechenden Breite gebildet werden kann, wird beim Expandieren des Auskleidungsschlauchs nach Art einer Sollbruchstelle aufgetrennt und erlaubt dadurch eine radiale Dehnung des ansonsten reißfesten und nahezu nicht dehnbaren äußeren Schutzschlauchs auf den jeweiligen Innendurchmesser des Kanalschachts. Die Sollbruchstelle kann aber auch in anderer Form, z.B. als Perforation, in den überlappend aus einer, zwei oder mehr Folienbahnen durch randseitiges Verkleben, bzw. Verschweißen gebildeten Schutzschlauch, der nachfolgend auch als weiterer Außenfolienschlauch bezeichnet wird, eingebracht werden.

Der Innenfolienschlauch besitzt einen sich in Längsrichtung desselben erstreckenden Verbindungsabschnitt, welcher zwei parallel zueinander verlaufende Umfangsabschnitte des Innenfolienschlauchs zu einem umfänglich geschlossenen Innenfolienschlauch mit einem definierten Nenndurchmesser DN verbindet, der bevorzugt dem Durchmesser des oberen ersten Schachtabschnitts entspricht. Der Verbindungsabschnitt umfasst erfindungsgemäß eine sich entlang des Innenfolienschlauchs erstreckende Sollbruchstelle, die durch Einbringen eines Druckmediums, insbesondere Druckluft, in Umfangsrichtung auftrennbar ist, so dass sich der Innenfolienschlauch und die darauf angeordnete Lage aus Fasermaterial radial über den Nenndurchmesser des ungeöffneten Innenfolienschlauchs hinaus, der im Wesentlichen dem Durchmesser des ersten oberen kleineren Schachtabschnitts entspricht, um mehr als 10 %, bevorzugt mehr als 30 % bis auf den größeren Durchmesser des zweiten unteren Schachtabschnitts aufweiten kann. Hierdurch ergibt sich der Vorteil, dass der umfänglich geschlossene Innenfolienschlauch mit der ungeöffneten Sollbruchstelle bei der Herstellung des Auskleidungsschlauchs auf einer Wickelmaschine als Basisschlauch dienen kann, um den Faserbänder herumgewickelt werden, und der einen wohl definierten Nenndurchmesser DN besitzt und den Wickeldorn der Wickelmaschine vor einem direkten Kontakt mit dem harzgetränkten Fasermaterial schützt.

Dieser Innenfolienschlauch, der eine große Laminatdehnung zulässt, ist damit die erste Schicht, um die die Lage aus Fasermaterial bei der bevorzugten Ausführungsform in bekannter Weise über einem inliegenden Wickeldorn endlos gewickelt wird. So kann der Auskleidungsschlauch in vorteilhafter Weise herkömmlich gefertigt, verpackt und zur Baustelle geliefert werden.

Im Unterschied zu einem bekannten gewickelten Auskleidungsschlauch, der zur Sanierung von horizontal verlaufenden Kanälen und Rohrleitungen mit einem im Wesentlichen konstanten Durchmesser eingesetzt wird, ist die schlauchförmig um den Innenfolienschlauch herum angeordnete Lage aus Fasermaterial beim erfindungsgemäßen Auskleidungsschlauch aus einem überlappend gewickelten Faserband geformt, welches gegenüber Faserbändern, die bei herkömmlichen Auskleidungsschläuchen eingesetzt werden, eine deutlich höhere Längsdehnung erlaubt. Diese erhöhte Längsdehnung, die in Längsrichtung betrachtet wenigstens 10 %, bevorzugt jedoch mehr als 30% oder gar 50% bezogen auf die Länge des ungedehnten Faserbandes betragen kann, ermöglicht es, dass die Glasfaserbänder der gewickelten Faserlage sich in radialer Richtung stärker ausdehnen können, so dass die Lage aus Fasermaterial ihren Durchmesser in radialer Richtung auf den jeweiligen Durchmesser des zweiten Schachtabschnitts erweitern kann, um sich an die Innenwand des erweiterten Schachtabschnitts anzulegen.

Ein solches Glasfaserband mit hoher Längsdehnung herzustellen, ist im Stand der Technik bekannt. Beim Wickeln, bzw. Legen der harzgetränkten Faserbänder des erfindungsgemäßen Auskleidungsschlauchs wird dementsprechend berücksichtigt, dass sich aufgrund der hohen radialen Dehnung die Wanddicke des Laminats entsprechend verringert, so dass die Materialdicke der schraubenförmig übereinander gewickelten Faserbänder um ein entsprechendes Maß erhöht wird, um die Lage aus Fasermaterial mit einem entsprechenden Übermaß herzustellen, welches im fertigen Produkt nach dem Ausdehnen und Aushärten die geforderte Festigkeit gewährleistet.

Die hohe Dehnbarkeit des oder der in der Lage aus Fasermaterial eingesetzten Faserbänder ist zudem auch bei alternativen Ausführungsformen der erfindungsgemäßen Auskleidungsschläuche von Vorteil, bei denen die Lage aus Fasermaterial nicht gewickelt, sondern als Matte überlappend um den Innenfolienschlauch mit der daran geformten Sollbruchstelle herum gelegt wird.

Der erfindungsgemäße Auskleidungsschlauch zeichnet sich dadurch aus, dass die radial aufweitbare Lage aus Fasermaterial an einem ersten, in das Gerinne eines Kanals einführbaren Ende des Auskleidungsschlauchs durch eine Naht verschlossen ist, die sich orthogonal zur Längsachse des Auskleidungsschlauchs erstreckt. Diese in Querrichtung verlaufende Naht wird bevorzugt dadurch erhalten, dass der Auskleidungsschlauch flach ausgelegt und die Enden desselben von außen her mit einem geeigneten Nahtmaterial, z.B. einem Kunststofffaden, vernäht werden, so dass das Ende des Auskleidungsschlauchs, welches zuerst in den Kanalschacht eingeführt wird, durch die Quernaht verschlossen ist.

Wie bereits zuvor erwähnt wurde, ist um die Lage aus Fasermaterial herum bevorzugt ein Außenfolienschlauch angeordnet. Dieser besitzt einen ersten, an einem ersten Ende der Naht entspringenden ersten Längsschlitz sowie einen am zweiten Ende der Naht entspringenden zweiten Längsschlitz, die sich bevorzugt parallel zur zentralen Längsachse des Auskleidungsschlauchs erstrecken. Obgleich die beiden Längsschlitze auch nach dem Vernähen des ersten Endes der Lage aus Faserband in den Außenfolienschlauch eingebracht werden können, erfolgt das Einbringen der Schlitze bevorzugt vor dem Anbringen der Naht, z.B. mit Hilfe eines Messers oder einer Schere.

Hierdurch eröffnet sich die Möglichkeit, dass gemäß einer weiteren Ausführungsform der Erfindung zwischen der inneren Lage des Außenfolienschlauchs und der zwischen dem ersten und zweiten Längsschlitz aufgespannten Außenseite der Lage aus Fasermaterial ein Gleitmittel, bevorzugt Silikonöl, aufgebracht werden kann, um die Reibung zwischen der inneren Lage des Außenfolienschlauchs und dem Fasermaterial zu verringern. Wie die Anmelderin erkannt hat, lassen sich hierdurch beim Expandieren des Auskleidungsschlauchs mittels eingebrachter Druckluft Falten in den Übergangsbereichen zwischen der Kanalwand und der Berme und/oder der Berme und dem Gerinne in überraschender Weise vermeiden, die andernfalls ohne ein solches Gleitmittel entstehen, wenn das mit der Naht auf dem Grund des Gerinnes aufliegende hoch dehnbare Fasermaterial entsprechend der Form des Gerinnes und der Berme aufgedehnt wird und sich deren Form anpasst. Wie die Anmelderin ferner erkennen konnte, wird die Verminderung der Falten in den genannten Übergangsbereichen in der Sohle eines Kanalschachts beim Expandieren des Auskleidungsschlauchs neben dem Gleitmittel zusätzlich auch durch die hohe Dehnfähigkeit des eingesetzten Fasermaterials von bevorzugt mehr als 30 % zusätzlich begünstigt.

Um eine möglichst glattflächige Anlage des Fasermaterials an die Innenwand des Gerinnes und die Berme zu ermöglichen, besitzen der erste Längsschlitz und der zweite Längsschlitz bevorzugt jeweils eine Länge, die im Wesentlichen der Breite der Berme zuzüglich der Hälfe der Abwicklung der Innenwandfläche des Gerinnes entspricht.

Wie von der Anmelderin weiterhin erkannt wurde, muss sich beim Einsatz eines Außenfolienschlauchs auch dieser entsprechend mehr radial dehnen, als bei einem herkömmlichen Auskleidungsschlauch. Dies kann entweder durch generell dehnfähigere Folien oder eine Soll- Dehnfuge erreicht werden, wie sie beispielsweise in der deutschen Patentanmeldung (DE 10 2011 103 001 A1) beschrieben ist. Alternativ besteht die Möglichkeit, den Außenfolienschlauch, der nach dem Wickeln/Legen der Faserbänder und Aufbringen des Längszugbands aus zwei Flachfolien zu einem Schlauch verschweißt wird, generell etwas weiter, d.h. mit einem größeren Durchmesser zu schweißen, welcher den Durchmesser des ersten Kanalabschnitts mit kleinem Innendurchmesser überschreitet. Dazu kann z.B. die Flachfolie aus denen dieser Schlauch thermisch geschweißt wird, so breit gewählt werden, dass deren Flachbreite in Summe dem Umfang des zweiten Schachtabschnitts mit vergrößertem Innendurchmesser entspricht. Damit dieser, mit einem zusätzlichen Übermaß von z.B. 50% geschweißte Außenfolienschlauch beim Transport zur Baustelle und beim Einziehen in einen Kanalschacht gut handhabbar ist, werden die Flachfolien bevorzugt längs gefaltet und mit Klebeband lösbar aneinander fixiert.

Um sicher zu stellen, dass die schlauchförmige Innenfolie des Innenfolienschlauchs, um die das Fasermaterial (Laminat) gewickelt oder gelegt wird, während des gesamten Expansionsvorgangs, bei welchem der Innenfolienschlauch und die darauf angeordnete Lage aus Fasermaterial mittels eingeleiteter Druckluft im Kanalschacht auf den Solldurchmesser gedehnt wird, sowie auch während der anschließenden Aushärtung mit UV Licht luftdicht bleibt, wird im Innenraum des Innenfolienschlauchs erfindungsgemäß ein weiterer Innenfolienschlauch angeordnet. Dieser kann z.B. bereits bei der Produktion des Auskleidungsschlauchs von vorn herein mit in den Innenfolienschlauch eingezogen werden, wenn dieser auf einem Wickeldorn, wie in der o.g. WO-A 95/04646 beschrieben gefertigt wird. Bevorzugt wird der weitere Innenfolienschlauch jedoch erst auf der Baustelle in den Auskleidungsschlauch eingeführt, was bei Auskleidungsschläuchen zur Auskleidung von Kanalschächten aufgrund der vergleichsweise geringen Längen von lediglich bis zu 6 m mit geringem Aufwand möglich ist.

Obgleich das Vorkonfektionieren des Auskleidungsschlauchs optional auch bei seiner Fertigung im Werk erfolgen kann, wird dieser bevorzugt auf der Baustelle mit dem die Sollbruchstelle aufweisenden Innenfolienschlauch konfektioniert. Hierzu wird der Auskleidungsschlauch entsprechend der Tiefe des zu sanierenden Kanalschachts auf die aktuell benötigte Länge gekürzt und die Quernaht in das untere Ende der Lage aus Fasermaterial eingebracht, welches der Sohle des Kanalschachts zugeordnet ist. Dies erfolgt bevorzugt durch Übereinanderlegen und überlappendes Vernähen des unteren Randes der Lage aus Fasermaterial. Vor oder auch nach dem Vernähen des unteren Randes werden die beiden Längsschlitze in die beiden Längskanten des Außenfolienschlauchs eingebracht, wobei der Auskleidungsschlauch bei horizontal liegender Naht bevorzugt flach auf einer Unterlage angeordnet ist. Nach dem Einbringen der beiden Längsschlitze in den Außenfolienschlauch werden die beiden zwischen diesen liegenden Folienabschnitte umgeschlagen und die Außenseite der Lage aus Fasermaterial mit dem zuvor erwähnten Gleitmittel bestrichen oder auch besprüht, und die zurück geschlagenen Abschnitte danach wieder in ihre Ausgangslage zurück geschlagen.

Im Anschluss daran wird der weitere Innenfolienschlauch, der bevorzugt aus der gleichen Folie wie der Innenfolienschlauch besteht, in den Auskleidungsschlauch eingeführt.

Der weitere Innenfolienschlauch, dessen Durchmesser mindestens dem vergrößerten Durchmesser des zweiten Schachtabschnitts entspricht, wird hierzu an seinem einen Ende mit einem Knoten oder Kabelbinder verschlossen, so dass ein Foliensack entsteht, der bevorzugt ca. 10 - 20% länger als das konfektionierte Stück des Auskleidungsschlauchs ist, welches in den Kanalschacht eingesetzt werden soll.

Der auf die gewünschte Schachttiefe konfektionierte Auskleidungsschlauch wird dann an seinem oberen Ende mit einem bekannten Packer verschlossen und mittels eines Krans in das Schachtbauwerk abgelassen, bis das zweite, durch die Naht verschlossene Ende auf der sogenannten Berme, d.h. dem Übergang zwischen zylindrischem Teil des Kanalschachts und dem sogenannten Gerinne, aufliegt. Hierbei wird der am Packer aufgehängte Auskleidungsschlauch durch Rotieren des Packers so ausgerichtet, dass die Quernaht in Längsrichtung des Gerinnes verläuft, *so* dass die Naht vollständig im Gerinne zu liegen kommt und das beiderseits der Naht angeordnete Fasermaterial auf der Berme aufliegt, wenn der Auskleidungsschlauch vollends in den Kanalschacht abgesenkt wurde.

Im Anschluss daran wird der zweite Innenfolienschlauch durch den Packer hindurch von oben her in den Auskleidungsschlauch eingeführt, und eine UV-Lichtquelle von oben her eingehängt.

Danach wird der Auskleidungsschlauch mit dem eingesetzten weiteren Innenfolienschlauch (Luftsack), welcher einen wesentlich größeren Durchmesser besitzt, als der erste Schachtabschnitt, bzw. der nicht aufgetrennte Innenfolienschlauch, mittels des Packers verschlossen, und der Innenraum des Luftsacks über eine externe Druckluftquelle mit Druckluft beaufschlagt. Hierdurch wird der weitere Innenfolienschlauch expandiert, und legt sich zunächst an den die Sollbruchstelle aufweisenden geklebten, bzw. thermisch verschweißten Innenfolienschlauch an, dessen Durchmesser im Wesentlichen dem Durchmesser des ersten kleineren Schachtabschnitts entspricht.

Wird der Druck weiter erhöht reißt die Verklebung/Schweißnaht (Sollbruchstelle) des Innenfolienschlauchs auf, so dass dieser fortan keinen Widerstand mehr gegen eine weitere Aufdehnung darstellt. Dies ermöglicht es, dass sich die Lage aus Fasermaterial, die einen Durchmesser besitzt, welcher im Wesentlichen dem Durchmesser des ersten oberen (kleineren) Schachtabschnitts entspricht, radial weiter aufdehnen kann.

Da der Durchmesser des weiteren Innenfolienschlauchs gleich oder bevorzugt etwas größer als der Durchmesser des zylindrischen unteren Abschnitts des Kanalschachts ist, erfährt der weitere Innenfolienschlauch weder im oberen ersten Schachtabschnitt, als auch im unteren zweiten Schachtabschnitt eine Dehnung, so dass sich dieser weitere Innenfolienschlauch (Luftsack) im ersten Schachabschnitt spannungsfrei an die Innenwand des entlang der Sollbruchstelle geschlossenen Innenfolienschlauchs und im zweiten vergrößerten Schachtabschnitt - sowie auch in dem die beiden Schachtabschnitte verbindenden konischen Übergangsabschnitt - nach dem Aufplatzen der Sollbruchstelle des Innenfolienschlauchs an die Innenwand der Lage aus Fasermaterial anlegen kann. Hierdurch wird in vorteilhafter Weise sichergestellt, dass der weitere Innenfolienschlauch insgesamt luftdicht bleibt und trotz der geöffneten Solbruchstelle im Innenfolienschlauch keine Druckluft durch die Lage aus harzgetränktem Fasermaterial hindurch austreten kann, welche zu einem Ausblasen von Reaktionsharz und eine damit einher gehende Schwächung des ausgehärteten Laminats führen würde.

Durch das Expandieren des weiteren Innenfolienschlauchs (Luftsack) wird das auf dem Gerinne und der Berme aufliegende Fasermaterial in dem Bereich um die Quernaht herum ebenfalls aufgedehnt und gegen die von oben her sichtbaren Flächen der Berme und des Gerinnes gedrängt. In diesem Zusammenhang konnte von der Anmelderin beobachtet werden, dass sich die mit dem Gleitmittel beschichteten Abschnitte der Lage aus Fasermaterial aufgrund der verminderten Reibung und der erhöhten Dehnbarkeit des Fasermaterials von bevorzugt mehr als 30 % sowie dem Aufdehnen des Folienmaterials des weiteren Innenfolienschlauchs nahezu faltenfrei an die Oberflächen der Berme, bzw. Bermen und des Gerinnes anlegen, wenn der Auskleidungsschlauch vollständig aufgedehnt ist.

Wie die Anmelderin ferner erkannt hat, ist der weitere Innenfolienschlauch bei der Sanierung von Kanalschächten zwingend erforderlich, da im Gegensatz zu herkömmlichen Auskleidungsschläuchen für die Sanierung von horizontal verlaufenden Kanälen und Rohrleitungen im unteren Schachtabschnitt kein zweiter Packer zum Verschließen des Auskleidungsschlauchs eingesetzt werden kann.

Als besonders vorteilhaft hat es sich in diesem Zusammenhang gezeigt, dass durch den Einsatz der zuvor beschriebenen Ausführungsform des erfindungsgemäßen Verfahrens die Berme und das Gerinne eines Kanalschachts, in ein und demselben Arbeitsgang mit ausgekleidet werden können.

Nach einem weiteren der Erfindung zugrunde liegenden Gedanken, der die Möglichkeit einer zusätzlichen Sicherung des Auskleidungsschlauchs gegen Auftrieb innerhalb des Kanalschachts eröffnet, werden vor dem Einführen des an seinem unteren Ende durch die Naht verschlossenen Auskleidungsschlauchs in den Kanalschacht an der Innenwand des ersten und/oder zweiten Schachtabschnitts Halteelemente, insbesondere Blöcke und/oder gekürzte Steigeisen und/oder Nuten angebracht. Diese werden nach dem vollständigen Absenken des Auskleidungsschlauchs von der Außenseite des Außenfolienschlauchs und dem darin angeordneten Fasermaterial unter Erzeugung einer lokalen radialen Ausbeulung des Fasermaterial überdeckt, wenn der weitere Innenfolienschlauch expandiert wird und die Lage aus Fasermaterial bei konvex nach innen ragenden Halteelementen um diese herum gegen die Innenwand drängt. Bei Vertiefungen, wie Löchern, die im Bereich der Sohle des Kanalschachts in dessen Innenwand eingebracht werden, wird das hoch dehnbare, mit flüssigem Reaktionsharz getränkte Fasermaterial durch den weiteren Auskleidungsschlauch lokal in die jeweilige Vertiefung hinein gedrückt wodurch sich die Lage aus Fasermaterial radial nach außen hin in die Vertiefung hinein ausbeult.

Nach dem Aushärten des Reaktionsharzes bilden diese lokalen Ausbeulungen des gehärteten Fasermaterials eine Formschluss, der den Auftriebskräften entgegenwirkt, welche durch Grundwasser entstehen, das in die Sohle des brüchigen Altkanals eindringt und versucht, den ausgehärteten Auskleidungsschlauch, der gegenüber dem Grundwasser abgedichtet ist, nach oben zu drängen.

Anders ausgedrückt hintergreifen die lokalen radialen Ausbeulungen des Fasermaterials die Halteelemente im Kanalschacht, die fest mit der Wand des Kanalschachtes verbunden, bzw. in dieser geformt sind, nach dem Expandieren und Aushärten des Auskleidungsschlauchs formschlüssig und fixieren diesen in der Sohle des Kanalschachts mechanisch.

Die Erfindung wird nachfolgend mit Bezug auf die Zeichnungen anhand von bevorzugten Ausflihrungsformen beschrieben.

In den Zeichnungen zeigen:
- Fig. 1: eine schematische teiltransparente Aufsicht auf einen erfindungsgemäßen Auskleidungsschlauch vor dem einbringen der Naht,
- Fig. 2a: eine schematische Darstellung eines zu sanierenden Kanalschachts mit angedeuteter Berme und Gerinne vor dem Einführen eines erfindungsgemäßen Auskleidungsschlauchs,
- Fig. 2b: den Kanalschacht von Fig. 2a nach dem Absenken des Auskleidungsschlauchs,
- Fig. 2c: den Kanalschacht von Fig. 2a vor dem Einführen des weiteren Innenfolienschlauchs in den Auskleidungsschlauch,
- Fig. 2d: den Kanalschacht von Fig. 2a nach dem Einführen des weiteren Innenfolienschlauchs,
- Fig. 2e: den Kanalschacht von Fig. 2a nach dem Einführen einer Strahlungsquelle und Expandieren des Auskleidungsschlauchs sowie Bestrahlen der Innenseite der an die Innenwand der unterschiedlich weiten Schachtabschnitte angelegten Lage aus Fasermaterial,
- Fig. 3: eine schematische Teildarstellung einer bevorzugten Ausführungsform eines in den erfindungsgemäßen Auskleidungsschläuchen eingesetzten Innenfolienschlauch mit Sollbruchstelle,
- Fig. 4: eine schematische Teildarstellung einer weiteren Ausführungsform eines in den erfindungsgemäßen Auskleidungsschläuchen eingesetzten nahtlosen Innenfolienschlauch mit einer Sollbruchstelle, die eine Folienschlaufe enthält, welche durch einen Folienstreifen überbrückt ist,
- Fig. 5: eine Querschnittsansicht des unteren ersten Endes eines bis in das Gerinne herabgelassenen erfindungsgemäßen Auskleidungsschlauchs zur Verdeutlichung der Ausrichtung der Naht relativ zum Gerinne, und
- Fig. 6: eine Querschnittsansicht eines mit zusätzlichen konvexen und konkaven Halteelementen versehenen Kanalschachtes mit einem in diesen eingezogenen ausgehärteten erfindungsgemäßen Auskleidungsschlauch, der durch einen Formschluss zwischen den Halteelementen und dem ausgehärteten Fasermaterial gegen Auftrieb gesichert ist.

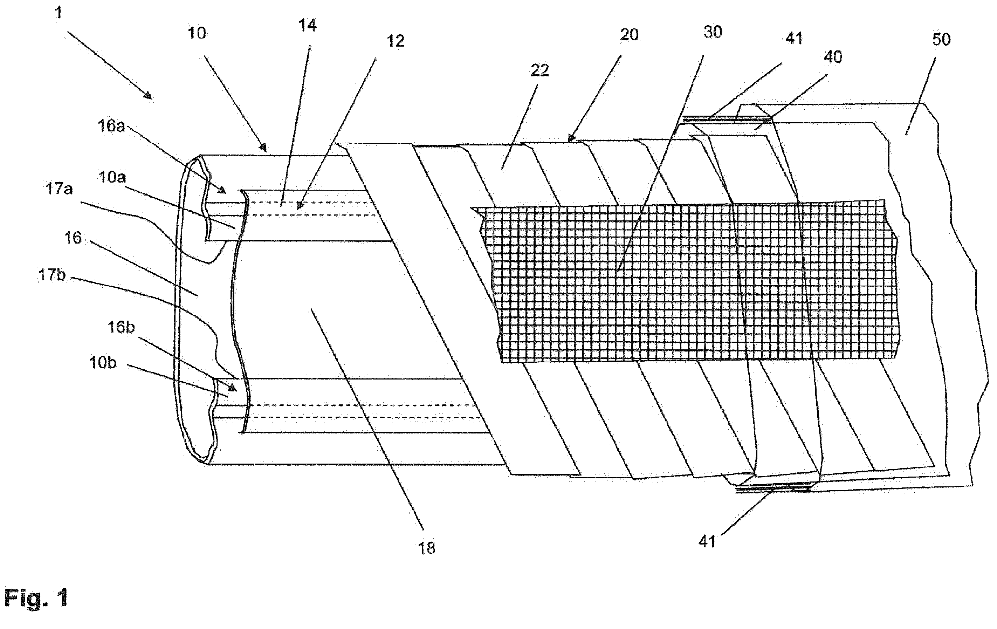

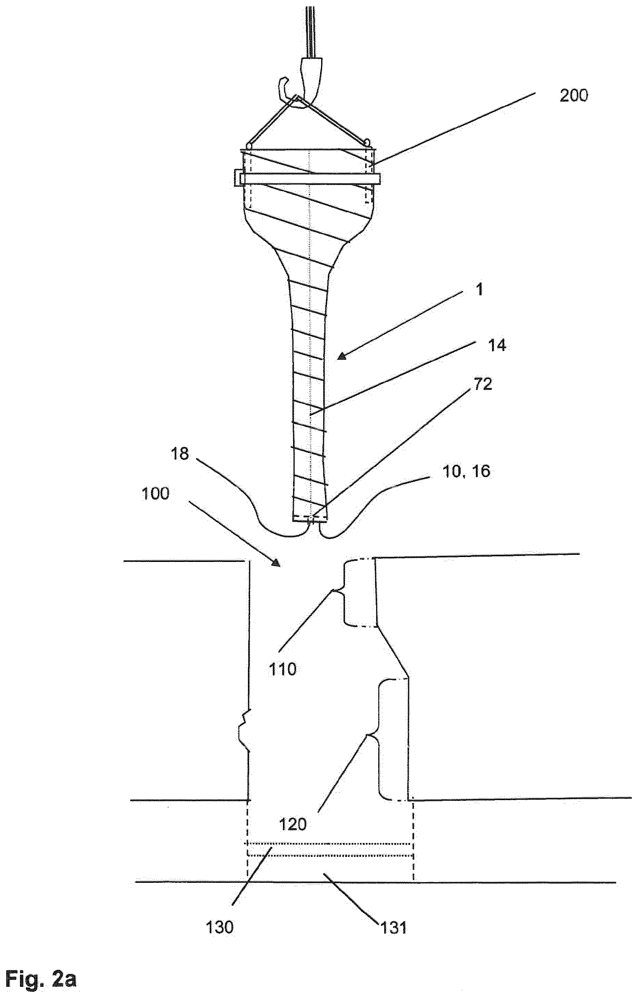

Wie in der Darstellung von Fig. 1 gezeigt ist, umfasst ein Auskleidungsschlauch 1 zur Sanierung eines in Fig. 2a dargestellte defekten Kanalschachts 100, der einen ersten Schachtabschnitt 110 mit einem ersten Durchmesser und einen sich daran anschließenden zweiten Schachtabschnitt 120 mit einem erweiterten Durchmesser aufweist, einen Innenfolienschlauch 10 sowie eine um diesen herum angeordnete, radial aufweitbare Lage aus Fasermaterial 20, welches mit einem härtbaren Reaktionsharz getränkt ist.

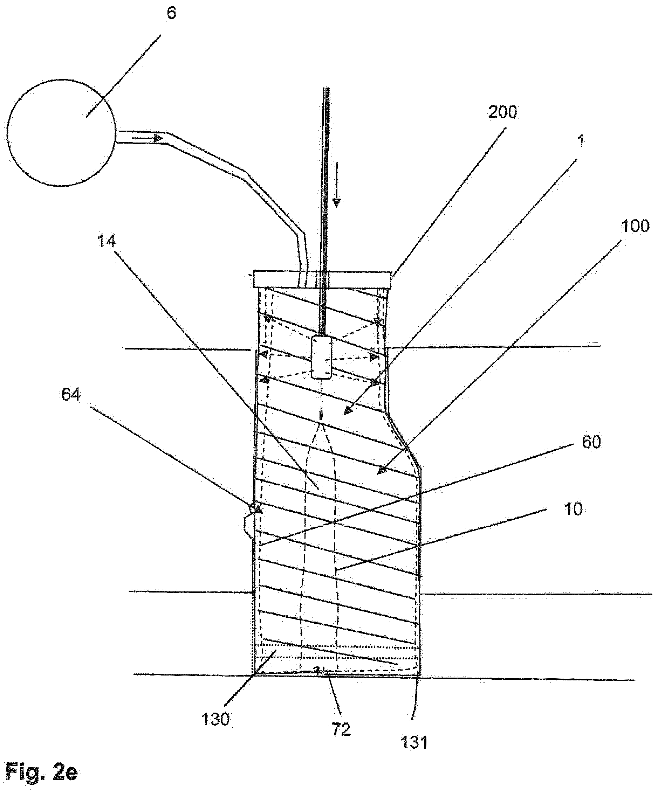

Der Innenfolienschlauch 10 besitzt einen sich in Längsrichtung desselben erstreckenden Verbindungsabschnitt 12, welcher zwei parallel zueinander verlaufende Umfangsabschnitte 10a, 10b des Innenfolienschlauchs 10 zu einem umfänglich geschlossenen Innenfolienschlauch mit einem definierten Nenndurchmesser DN verbindet. Der Verbindungsabschnitt 12 umfasst eine sich entlang des Innenfolienschlauchs 10 erstreckende Sollbruchstelle 14, die durch Einbringen eines Druckmediums, insbesondere Druckluft, aus einer Druckgasquelle 6 (Fig. 2e) in den Innenfolienschlauch 10 in Umfangsrichtung auftrennbar ist, so dass sich der Innenfolienschlauch 10 und die darauf angeordnete Lage aus Fasermaterial 20 radial über den Nenndurchmesser hinaus, der im Wesentlichen dem Durchmesser des ersten oberen kleineren Schachtabschnitts 110 (Fig. 2a) entspricht, um mehr als 10 %, bevorzugt mehr als 30 % und besonders bevorzugt bis zu 50 % bis auf den erweiterten Durchmesser des zweiten unteren Schachtabschnitts 120 aufweiten lässt. So kann in der Praxis bei einem üblichen Kanalschacht 100 mit einer Schachttiefe von 2 bis 5 m der kleinere Durchmesser des oberen Schachtabschnitts 110 beispielsweise 600 mm, und der Durchmesser des unteren zylindrischen zweiten Schachtabschnitts 120 z.B. 1000 mm betragen, wobei zwischen dem ersten und zweiten Schachtabschnitt 110, 120 ein konischer Übergangsabschnitt geformt ist.

Bei einer bevorzugten Ausführungsform der Erfindung wird zur Bildung des Innenfolienschlauchs 10 wenigstens eine, z.B. durch Legen zu einem Schlauch geformte transparente Flachfolie 16 verwendet, deren Längsränder 17a, 17b, wie in Fig. 1 gezeigt, im Abstand zueinander verlaufen und durch einen auf die Außenseite aufgeklebten oder thermisch aufgeschweißten transparenten Folienstreifen 18 miteinander verbunden sind. Die Sollbruchstelle 14 erstreckt sich bei dieser sehr kostengünstig zu fertigenden, in Fig. 1 gezeigten Ausführungsform entlang einem, bzw. beiden Längs-Schweißnähten, bzw. Klebestellen, entlang denen der transparente Folienstreifen 18 mit den entsprechenden Umfangsabschnitten 10a, 10b der ebenfalls transparenten Flachfolie 16 verbunden ist aus welcher der Innenfolienschlauch 10 geformt wird.

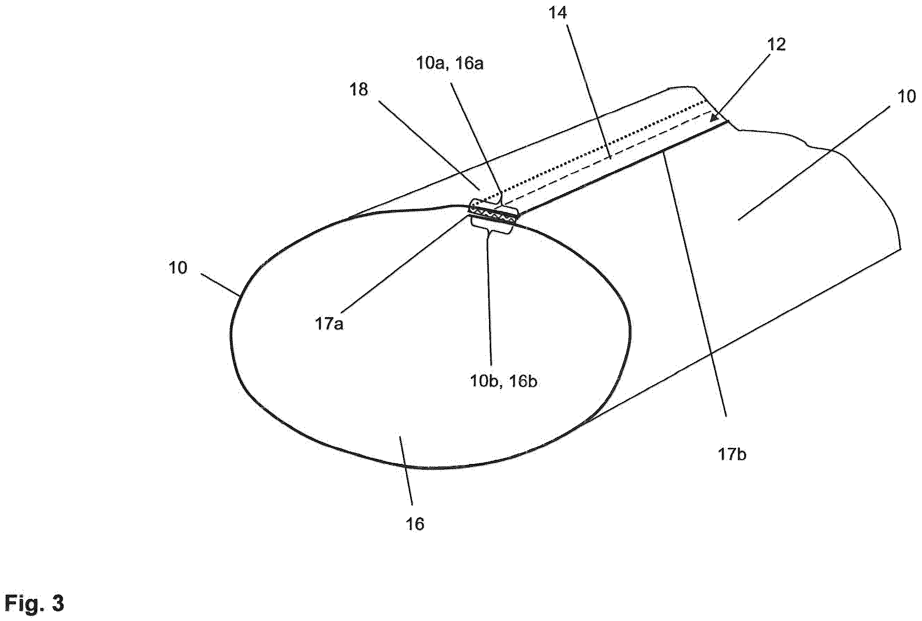

Bei einer weiteren, in Fig. 3 gezeigten Ausführungsform der Erfindung, die besonders kostengünstig und einfach zu fertigen ist, umfasst der Innenfolienschlauch 10 wenigstens eine zu einem Schlauch geformte Flachfolie 16, deren Randabschnitte 16a, 16b überlappend übereinander geführt und z.B. durch einen in Fig. 3 lediglich schematisch angedeuteten Klebstoff, z.B. ein doppelseitiges Klebeband, oder durch thermisches Verschweißen, miteinander verbunden sind. Alternativ können die Randabschnitte 16a und 16b auch durch ein transparentes Klebeband miteinander verbunden werden. Die zuvor beschriebenen beiden Ausführungsformen des erfindungsgemäßen Innenfolienschlauchs bieten den Vorteil, dass in diesen hinein ein weiterer umfänglich geschlossener, bevorzugt nahtloser Innenfolienschlauch eingelegt werden kann, der z.B. als kostengünstige endlose Rollenware bereit gestellt wird, bevor die beiden Umfangsabschnitte 10a, 10b miteinander verklebt, bzw. verschweißt werden. Bei dieser Ausführungsform werden die harzgetränkten Faserbänder der Lage aus Fasermaterial, in besonders vorteilhafter Weise um den verklebten/verschweißten Innenfolienschlauch überlappend herum gelegt. Die Faserbänder sind in diesem Falle als einzelne Matten ausgebildet, die eine Länge besitzen, welche der Länge des zu fertigenden Auskleidungsschlauchs entspricht. Die Breite der Matten ist bei dieser Ausführungsform geringfügig, z.B. 10 %, größer als der Innenumfang des zweiten vergrößerten Schachtabschnitts 120, wodurch sicher gestellt wird, dass die Lage aus Fasermaterial sich durch umfängliches Verschieben der überlappend geführten Längsränder der Matte auf den zweiten größeren Durchmesser aufweiten kann, dabei jedoch umfänglich vollständig stets geschlossen bleibt, wenn sich die Lage aus Fasermaterial an den zweiten Schachtabschnitt mit größerem Durchmesser angelegt hat.

Um bei den zuvor beschriebenen Ausführungsformen des durch überlappendes Verkleben/Verschweißen einer Flachfolie 16 gefertigten Innenfolienschlauchs 10 einen Austritt von Druckluft durch die mitunter nicht vollständig geschlossenen Nahtstellen, bzw. durch die geöffnete Sollbruchstelle 14 im Bereich des zweiten Schachtabschnitts 120 mit vergrößertem Durchmesser zu verhindern, wird innerhalb des verschweißten/verklebten Innenfolienschlauchs 10 ein weiterer Innenfolienschlauch 60 aus einem luftdichten transparenten Kunststoffmaterial angeordnet, dessen eines Ende durch Verschweißen oder durch ein Dichtelement 62, insbesondere eine um die Außenseite des weiteren Innenfolienschlauchs 60 herum gewickelte Schnur, oder einen Kabelbinder, zur Bildung eines einseitig geschlossenen Luftsacks 64 luftdicht verschließbar ist. Obgleich der weitere Innenfolienschlauch 60 bereits während der Fertigung werkseitig in den Innenfolienschlauch 10 eingelegt werden kann, wird dieser bevorzugt erst auf der Baustelle, insbesondere nach dem Einführen des Auskleidungsschlauchs 1 in den vertikalen Kanalschacht 100, in den Innenraum des Innenfolienschlauchs 10 eingeschoben, wobei das untere freie Ende des weiteren Innenfolienschlauchs 60 zur Bildung des einseitig geschlossenen Luftsacks 64 zuvor durch Verschweißen oder durch ein Dichtelement 62 luftdicht verschlossen wird.

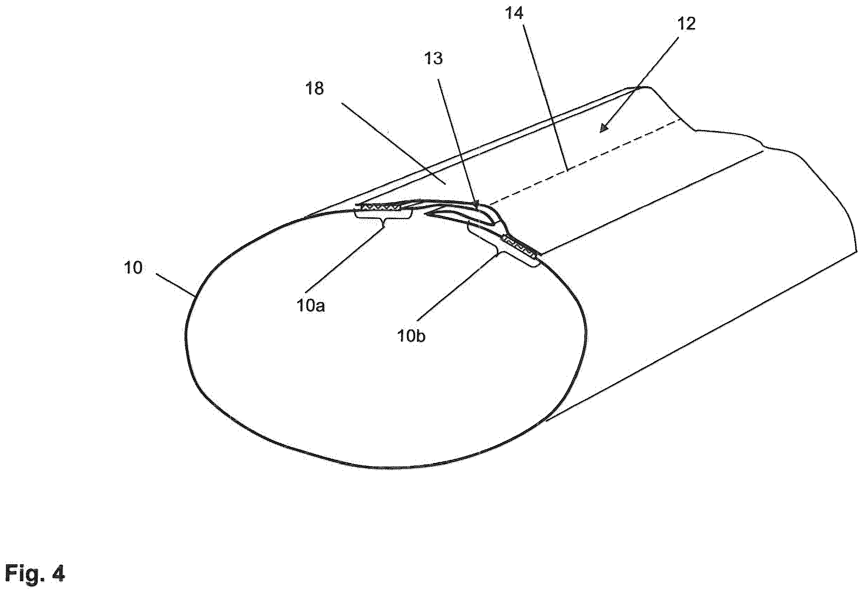

Nach einer weiteren alternativen Ausführungsform der Erfindung kann der Innenfolienschlauch 10 ein in Umfangsrichtung nahtloser Folienschlauch sein, der einen kreisförmigen Querschnitt mit einem Durchmesser besitzt, der mehr als 10%, bevorzugt mehr als 40% des Nenndurchmessers des ersten Schachtabschnitts 110 beträgt, und der bevorzugt dem Durchmesser des zweiten vergrößerten Schachtabschnitts 120 eines zu sanierenden Kanalschachts 110 entspricht. Die beiden benachbart zueinander angeordneten außenliegende Umfangsabschnitte 10a, 10b des nahtlosen Folienschlauchs 10 sind bei dieser, in Fig. 4 gezeigten Ausführungsform der Erfindung im Bereich des Verbindungsabschnitts 12 unter Bildung einer in Umfangsrichtung des Innenfolienschlauchs 10 verlaufenden, sich über die Länge des Innenfolienschlauchs 10 hinweg erstreckenden Folienschlaufe 13 durch einen aufgeklebten oder thermisch aufgeschweißten transparenten Folienstreifen 18 verbunden, der die Folienschlaufe 13 überspannt und abdeckt. Hierdurch wird in vorteilhafter Weise ein Verbindungsabschnitt mit einer Sollbruchstelle 14 bereitgestellt, die in Fig. 4 entlang des ersten und zweiten Umfangsabschnitts 10a, 10b exemplarisch im Bereich der Klebestelle oder Schweißnaht verläuft, und der schematisch durch die gestrichelten Linien in Fig. 4 angedeutet ist. Beim Einsetzen und Expandieren des Innenfolienschlauchs 10 der Ausführungsform von Fig. 4 spielt es dabei keine Rolle, ob die in der Darstellung rechte oder linke Schweißnaht/Klebestelle beim Expandieren des Auskleidungsschlauchs 1 im erweiterten zweiten Schachtabschnitt 120 aufreißt, da durch den in Umfangsrichtung vollständig geschlossenen Innenfolienschlauch 10 stets für ein abgeschlossenes Luftvolumen im Inneren des Auskleidungsschlauchs 1 gesorgt wird, welches ein Ausblasen des Reaktionsharzes beim Expandieren desselben zuverlässig verhindert.

Um bei einer Lage aus Fasermaterial 20, die durch überlappendes schraubenförmiges Wickeln erhalten wird, eine ausreichend hohe umfängliche Dehnbarkeit der Lage zu gewährleisten, besitzt diese wenigstens ein schraubenförmig überlappend gewickeltes Faserband, insbesondere Glasfaserband 22, dessen Fasermaterial eine Dehnbarkeit in Längsrichtung von mehr als 10 % bezogen auf die Gesamtlänge des Bandes aufweist. Wie von der Anmelderin gefunden wurde, erlaubt diese große Längsdehnung eine entsprechend große radiale Aufdehnung der aus dem schraubenförmig überlappend gewickelten Faserband hergestellten Lage 20 um mehr als 10 %, insbesondere mehr als 30 %, bis hin zu 60 %, ohne dass ein signifikanter Schrumpf in Längsrichtung des Auskleidungsschlauchs 1 auftritt.

Wie der Darstellung der Fig. 1 weiterhin entnommen werden kann, ist bei den zuvor beschriebenen Ausführungsformen von Auskleidungsschläuchen 1 auf der Lage aus Fasermaterial 20 bevorzugt wenigstens ein Längszugband 30 angeordnet, welches sich in Längsrichtung des Auskleidungsschlauchs 1 erstreckt. Das Längszugband 30 umfasst bevorzugt durchgängige Glasfasern oder Glasfaser-Rovinge, die bevorzugt über die gesamte Länge des Auskleidungsschlauchs hinweg verlaufen und die die Axialkräfte aufnehmen, wenn der Auskleidungsschlauch 1 beispielsweise mittels eines Krans in einen zu sanierenden defekten Kanalschacht 100 eingesetzt wird.

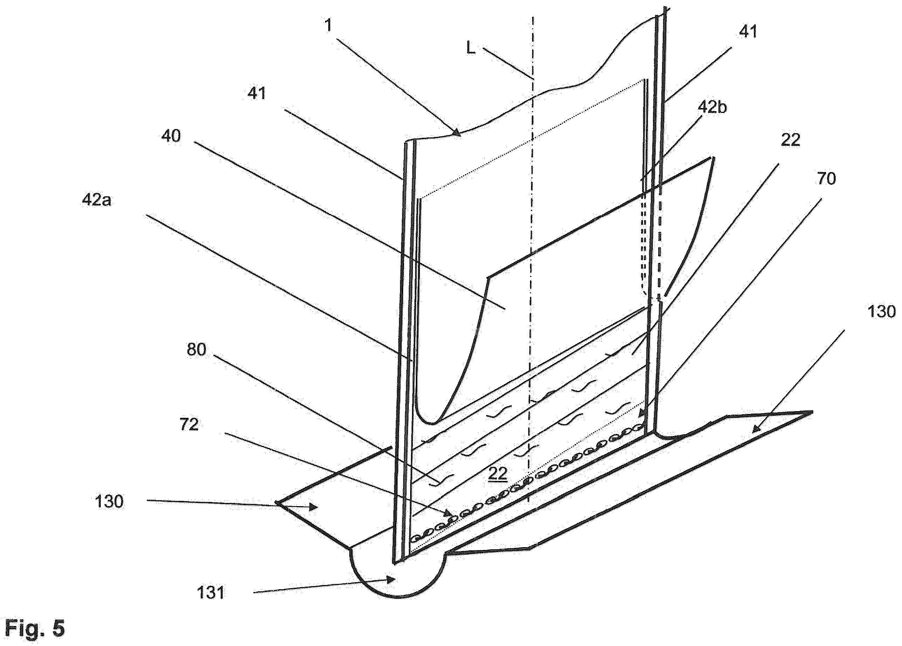

Wie der Darstellung der Figuren 2a bis 2e und 5 entnommen werden kann, ist die radial aufweitbare schlauchförmige Lage aus Fasermaterial 20 an einem ersten, in das Gerinne 131 des Kanalschachts 100 einführbaren Ende 70, das auch als unteres Ende bezeichnet wird, durch eine Naht 72 verschlossen, die sich orthogonal zur Längsachse L der schlauchförmigen Lage aus Fasermaterial 20 erstreckt. Die Naht 72 ist in Fig. 5 lediglich schematisch angedeutet, und kann beispielsweise zusätzliche Knoten zwischen den Einstichstellen aufweisen, mit denen die beiden vernähten unteren Randabschnitte des Fasermaterials 22 im Bereich des ersten Endes 70 der Lage aus Fasermaterial 22 lokal zusätzlich gegen ein Verrutschen und Verschieben gesichert sind. Der Innenfolienschlauch ist im Nahtbereich bevorzugt nach wie vor vorhanden, kann aber auch lokal um die Naht 72 entfernt werden.

Um die schlauchförmige, radial aufweitbare Lage aus Fasermaterial 20 herum ist bevorzugt ein Außenfolienschlauch 40 angeordnet, welcher einen Durchmesser besitzt, der größer oder gleich dem Durchmesser des weiteren Innenfolienschlauchs/Luftsacks 64 ist, und der bevorzugt eine Barriere bildet, die den Austritt von schädlichen Substanzen, insbesondere Styrol, aus dem Reaktionsharz in das umliegende Erdreich verhindert. Der Außenfolienschlauch 40 kann zudem von einem weiteren Außenfolienschlauch 50 umgeben (Fig. 1) sein, der aus einem verstärkten zugfesten und für UV-Licht undurchlässigen Werkstoff besteht, insbesondere aus einer gewebeverstärkten Kunststofffolie, die mit einem umfänglich dehnbaren Abschnitt versehen ist, welcher beim Expandieren des Auskleidungsschlauchs ab einem vorgegebenen Überdruck, beispielsweise 0,2 bar, im zweiten Schachtabschnitt 120 ähnlich der Sollbruchstelle 14 aufplatzt und eine radiale Dehnung der Lage aus Fasermaterial 20 erlaubt.

Wie hierbei der Darstellung von Fig. 5 im Detail entnommen werden kann, ist umfasst der Außenfolienschlauch 40 einen ersten, an einem ersten Ende der Naht 72 entspringenden ersten Längsschlitz 42a sowie einen am zweiten Ende der Naht 72 entspringenden zweiten Längsschlitz 42b, die in vorteilhafter Weise vor dem Vernähen des unteren Randes der Lage aus Fasermaterial 20 in die beiden seitlichen Schweißnähte 41 eingebracht werden, mithilfe von welchen der Außenfolienschlauch 40 aus zwei um die Lage aus Fasermaterial (2) herumgelegte, und an den Längsrändern übereinander geführte Flachfolien aus einem thermoplastischem Kunststoffmaterial in bekannter Weise durch thermisches Verschweißen gebildet wird. Die beiden Längsschlitze 42a, 42b können beispielsweise durch Auftrennen oder Abtrennen der seitlichen Schweißnähte 41 erhalten werden, und besitzen jeweils eine Länge, die bevorzugt im Wesentlichen der Breite der Berme 130 zuzüglich der Hälfe der Abwicklung der Innenwandfläche des Gerinnes 131 entspricht. Sofern sich die Berme, wie in Fig. 5 dargestellt, aus zwei einzelnen seitlichen Bermen 130 zusammensetzt, entspricht die zuvor genannte Summe der Summe der Breite der beiden einzelnen Bermen 130.

Um die Faltenbildung beim Expandieren des Auskleidungsschlauchs 1 im Bereich des Gerinnes 131 und der Bermen 130 in vorteilhafter Weise zu verhindern, ist es bei der bevorzugten Ausführungsform der Erfindung vorgesehen, dass zwischen der Innenseite des Außenfolienschlauchs 40 und einem zwischen dem ersten und zweiten Längsschlitz 42a, 42b aufgespannten Außenabschnitt der schlauchförmigen Lage aus Fasermaterial 20 ein Gleitmittel 80, bevorzugt Silikonöl, aufgebracht wird, welches in der Darstellung der Fig. 5 lediglich schematisch durch die wellenartigen Kurzlinien 80 angedeutet ist. Sofern zusätzlich ein weiterer Außenfolienschlauch 50 zum Einsatz kommt, so wird auch dieser entlang der Längsschlitze 42a, 42b aufgetrennt, um das Gleitmittel 80 einbringen zu können und das Anlegen des Fasermaterials der Lage 20 im Bereich des Gerinnes und der Bermen zu erleichtern.

Nach einem weiteren der Erfindung zugrunde liegenden Gedanken zeichnet sich ein Verfahren zur Herstellung eines zuvor beschriebenen Auskleidungsschlauchs 1 durch die folgenden Verfahrensschritte aus:
Zunächst wird eine für UV-Licht durchlässige Kunststoff-Flachfolie 16 zu einem umfänglich geschlossenen Innenfolienschlauch 10 mit einem vorgegebenen Nenndurchmesser geformt. Dies erfolgt in vorteilhafter Weise durch überlappendes Verkleben oder Verschweißen der Längsränder 17a, 17b der transparenten Kunststoff-Flachfolie 16 und/oder durch Aufkleben oder thermisches Aufschweißen eines transparenten Folienstreifens 18 auf zwei benachbarte außenliegende parallel zueinander verlaufenden Umfangsabschnitte 10a, 10b der schlauchförmig angeordneten Kunststoff-Flachfolie 16. Hierdurch wird ein Verbindungsabschnitt 12 erzeugt, welcher eine in Längsrichtung des Innenfolienschlauchs 10 verlaufende Sollbruchstelle 14 aufweist. Auf der Außenseite des so gebildeten Innenfolienschlauchs 10 mit Sollbruchstelle 14 wird wenigstens eine umfänglich geschlossene Lage 20 aus Fasermaterial durch überlappendes Legen oder überlappendes schraubenförmiges Wickeln von wenigsten einem harzgetränkten Faserband 22, insbesondere Glasfaserband angeordnet. Das Wickeln erfolgt hierbei bevorzugt auf einer Wickelvorrichtung, wie sie beispielsweise in der WO-A 95/04646 beschrieben ist.

Bei einer besonders vorteilhaften Ausführungsform des Verfahrens wird in die Kunststoff-Flachfolie 16 ein sich über die Länge des Auskleidungsschlauchs 1 hinweg erstreckender weiterer transparenter umfänglich luftdicht geschlossener Innenfolienschlauch 60 eingelegt, bevor die Kunststoff-Flachfolie 16 zu dem umfänglich geschlossenen Innenfolienschlauch 10 geformt und die Naht 72 werksseitig in das erste untere Ende 70 der Lage aus Fasermaterial 20 eingebracht wird.

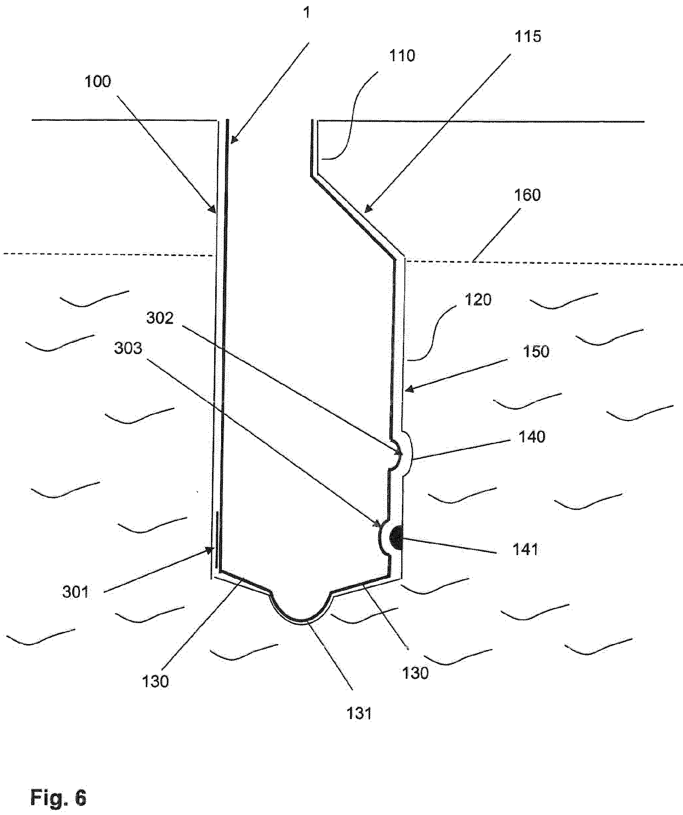

Mit dem beschriebenen Auskleidungsschlauch 1 ist es möglich, nicht nur die zylindrischen Teile 110 und 120 und den konischen Teil 115 des Kanalschachts 100 auszukleiden, sondern es besteht darüber hinaus die Möglichkeit, auch den Übergang zwischen dem zweite unteren Schachtabschnitt 120 und dem Gerinne 131, d.h. die sog. Berme 130, ohne weitere Schritte mit auszukleiden, wie dies in Fig. 6 angedeutet ist.

Der in der zuvor beschriebenen Weise gefertigte und werksseitig mit der Naht 72 versehene Auskleidungsschlauch 1 wird anschließend zur Baustelle transportiert und dort in einem zu sanierenden defekten Kanalschacht 100 installiert, wie dies in den Darstellungen der Figuren 2a bis 2e gezeigt ist.

Hierbei wird zunächst ein Ende des Auskleidungsschlauchs 1, beispielsweise mit einem nicht näher bezeichneten Spanngurt, an einem bekannten topfförmigen Packer 200 befestigt, der durch einen nicht näher gezeigten Kran oberhalb des Kanalschachts 100 gehalten wird. Der Packer 200 mit dem daran befestigten Auskleidungsschlauch 1 wird anschließend, wie in Fig. 2a gezeigt, in einer vertikalen Position oberhalb des Kanalschachts 100 positioniert, der einen ersten oberen Schachtabschnitt 110 mit einen kleineren Durchmesser, beispielsweise 600 mm, und einen darunterliegenden zweiten Kanalabschnitt 120 mit einem größeren Durchmesser, beispielsweise 1000 mm, besitzt.

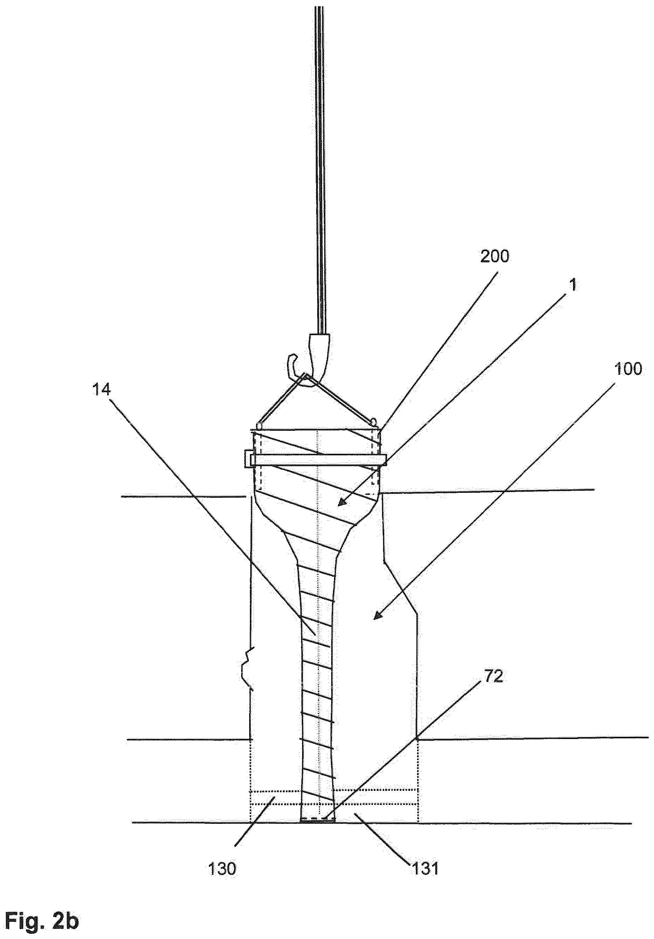

Als nächstes wird der Packer 200 mit dem daran befestigten Auskleidungsschlauch 1 in den Kanalschacht 100 abgesenkt bis das untere Ende 70 des Auskleidungsschlauchs 1, bzw. die Naht 72 auf dem Boden des Gerinnes 131 des Kanalschachts 100 aufliegt, welches in gleicher Weise wie die Berme 130 in Fig. 2b lediglich schematisch durch gepunktete Linien dargestellt ist.

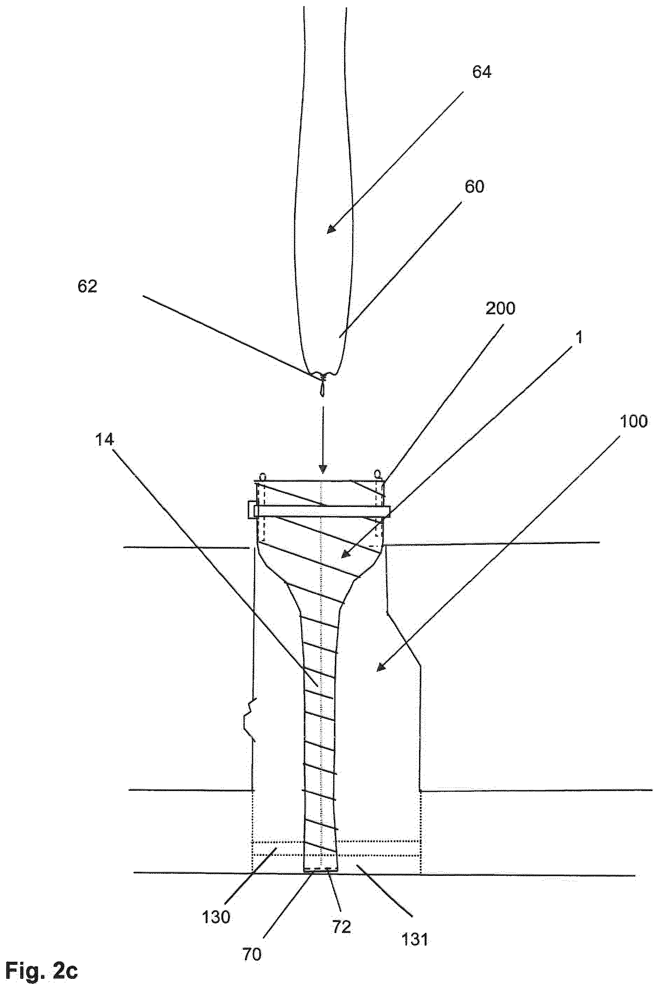

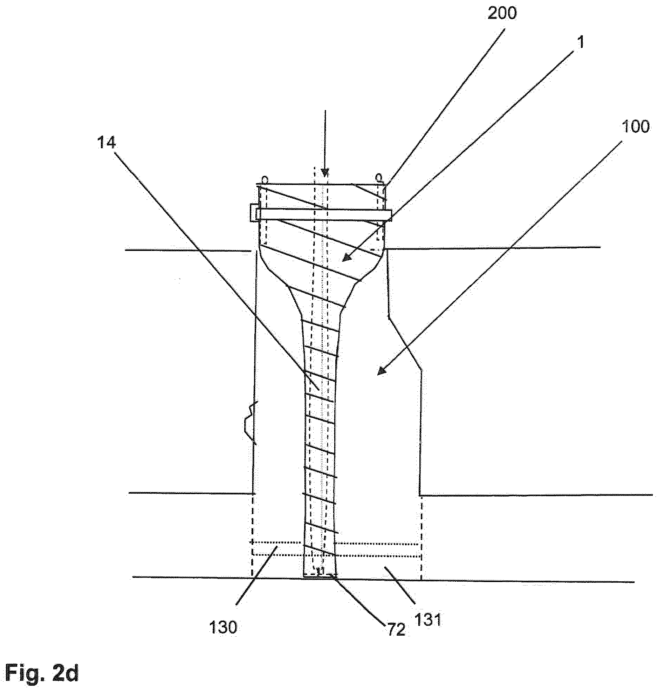

Im Anschluss daran wird ein zuvor beschriebener weiterer Innenfolienschlauch 60, der zuvor bodenseitig beispielsweise durch ein Dichtelement 62 oder durch Verknoten verschlossen wurde und einen einseitig geschlossenen Luftsack 64 bildet, von oben her in den Innenfolienschlauch 10 des Auskleidungsschlauchs 1 eingeführt, wie dies in den Figuren 2c und 2d gezeigt ist.

In einem letzten Verfahrensschritt wird der Packer 200 auf seiner Oberseite in bekannter Weise durch einen nicht näher bezeichneten Deckel verschlossen und der Innenraum des Luftsacks 64 in bekannter Weise durch Einleiten von Druckluft aus einer Druckluftquelle 6 durch den Deckel des Packers 200 hindurch mit Überdruck beaufschlagt. Hierdurch legt sich der Innenfolienschlauch 10 im Bereich des ersten Kanalabschnitts 110 an die Innenseite der Lage aus Fasermaterial 20 an und drängt diese gegen die Innenseite des ersten Schachtabschnitts 110, wobei der Innenfolienschlauch 10 entlang der Sollbruchstelle 14 geschlossen ist. In dem sich anschließenden konischen Übergangsabschnitt 115 sowie dem zweiten Schachtabschnitt 120, in dem der Kanalschacht 100 einen größeren Durchmesser als der Nenndurchmesser des Innenfolienschlauchs 10 aufweist, reißt die Sollbruchstelle 14 aufgrund des zunehmenden Drucks auf und erlaubt es, dass sich der weitere Innenfolienschlauch/Luftsack 64 an die Innenseite der teilweise freigelegten Lage 20 aus Fasermaterial 20 anlegt und dieses radial aufweitet und gegen die Innenwand des zweiten Schachtabschnitts 20 drückt.

Schließlich wird das Reaktionsharz in der Lage aus Fasermaterial 20 durch Einführen einer nicht näher bezeichneten UV-Strahlungsquelle in den Innenraum des Luftsacks 64 ausgehärtet, während das Fasermaterial durch den Überdruck im weiteren Innenfolienschlauch 60/Luftsack 64 mit hohem Druck an die Innenwand des Kanalschacht 100 angedrückt wird.

Bei der bevorzugten Ausführungsform der Erfindung wird zur Auskleidung der Bermen 130 und des Gerinnes 131 jedoch kein werksseitig vernähter, sondern ein in der zuvor beschriebenen Weise herkömmlich gefertigter, an beiden Seiten geöffneter Auskleidungsschlauch 1 auf die Baustelle transportiert und entsprechend vorbereitet. Bevor der Auskleidungsschlauch 1 jedoch wie zuvor beschrieben am Packer 200 befestigt und an einem Kran eingehängt wird, wird am ersten unteren Ende 70 in einem Bereich, der in seiner Länge in etwa der Breite der Berme 130 zuzüglich ca. der Hälfte der Abwicklung des Gerinnes 131 entspricht, der Außenfolienschlauch 40, der bevorzugt eine beiderseits längsverschweißte Verpackungsfolie aus einem thermoplastischen Kunststoffmaterial ist, z.B. entlang der Schweißnähte 41 aufgeschnitten, wie dies in Fig. 5 angedeutet ist. Die Folie wird zurückgeklappt, so dass das harzgetränkte Fasermaterial der Lage 20 frei liegt. Sofern vorhanden wird ein den Außenfolienschlauch 40 umgebender weiterer Außenfolienschlauch 50, in gleicher Weise in Höhe der Schweißnähte 41 mit aufgetrennt, und die lappenartigen Bereiche der Schläuche 40 und 50 zurückgeschlagen. Danach werden die Innenseiten der Lage aus Faserband 20 flach übereinandergelegt und entlang der Naht 72 grob zusammengenäht. Auf die Außenseite der frei liegenden Faserbänder 22 wird ein Gleitmittel 80, z.B. ein Silikonöl, aufgetragen, und im Anschluss daran die Folie des Außenfolienschlauchs 40 und ggf. des weiteren Außenfolienschlauchs 50 wieder auf die Außenseite der Lage aus Fasermaterial 22 mit dem darauf aufgetragenen Gleitmittel 80 geklappt.

Der unten zusammengenähte, zunächst flache Auskleidungsschlauch 1 wird in dieser Form mit seinem anderen offenen Ende am Packer 150 befestigt (Fig. 2a) und mittels des Krans so in das Schachtbauwerk 100 eingehängt, dass er mit seinem zusammengenähten Ende bis in das Gerinne 131 herunterhängt und mit der Naht 72 längs des Gerinnes 131 ausgerichtet ist (siehe Fig. 5). Das Ausrichten längs des Gerinnes 131 ist mit dem erfindungsgemäßen Auskleidungsschlauch 1 besonders leicht umsetzbar, da der Durchmesser des Auskleidungsschlauchs 1 maximal dem kleinen, oberen Durchmesser 110 des Kanalschachtes 100 entspricht und man dadurch die Möglichkeit erhält, während des Einführens des Auskleidungsschlauchs 1 in den Kanalschacht 100 die genaue Lage der Naht 72 zu beobachten. Demgegenüber haben Auskleidungsschläuche des Standes der Technik, deren Durchmesser an die unterschiedlichen Innendurchmesser eines betreffenden Kanalschachtes 100 angepasst sind, einen Durchmesser, der eher dem Durchmesser des zweiten erweiterten Schachtabschnitts 120 entspricht, so dass sie zum Einführen durch den ersten Schachtabschnitt mit verringertem Durchmesser 110 zusammengefaltet werden müssen.

In diesen so vorbereiteten Auskleidungsschlauch 1 wird der weitere Innenfolienschlauch 60, der am unteren Ende dicht verschlossen ist, und mit Druckluft expandiert werden dann eingesetzt. Wenn der Auskleidungsschlauch 1 expandiert wird, neigt dieser dazu, prinzipiell eine zylindrische Form einzunehmen, wohingegen die Bermen 130 und das Gerinne 131 eine eher flache Form besitzen. Da das Fasermaterial der Lage 20, welches nachfolgend auch als Laminat bezeichnet wird, im Bereich des ersten unteren Endes 70 durch das Gleitmittel 80 auf dem Folienmaterial des Außenfolienschlauchs 40 gleiten kann, ist es möglich, den an sich zylindrischen Auskleidungsschlauch in eine eher flache Form zu überführen. Wie die Anmelderin erkannt hat, ist dies insbesondere erst dadurch möglich, dass das Fasermaterial des Auskleidungsschlauchs 1, wie zuvor erwähnt eine sehr hohe Dehnbarkeit besitzt, die es ermöglicht, im Übergang von einem zylindrischen Bereich in einen eher flachen Bereich, das Fasermaterial allein durch das Einbringen und Expandieren des Luftsacks 64 im Wesentlichen faltenlos an die Oberflächen der Bermen 130 und des Gerinnes 131 anzudrücken.

Nach der Aushärtung des Reaktionsharzes, die in bekannter Weise bevorzugt mithilfe von UV-Licht erfolgt, welches im Reaktionsharz enthaltene Fotoinitiatoren aktiviert, werden dann gegebenenfalls in das Gerinne 131 und das Kanalrohr hineinragende Teile des ausgehärteten Auskleidungsschlauchs 1 in einem letzten Arbeitsschritt abgetrennt.

Nachdem der defekte Kanalschacht 100 einschließlich Bermen 130 und Gerinne 131 saniert wurde, bildet das sanierte Schachtbauwerk 150 einen an der Unterseite verschlossenen, wasserdichten Zylinder, wie dies in Fig 6 angedeutet ist. Durch das in Fig. 6 durch die gewellten Linien dargestellte Grundwasser erfährt der unten geschlossene Zylinder einen Auftrieb, der bei tiefen Schachtbauwerken 100 und hohem Grundwasserspiegel 160 dazu führt, dass die entstehenden Auftriebskräfte so groß werden, dass sie nicht mehr durch den oberen konusförmigen Teil 115 allein in das Erdreich abgetragen werden können.

Um dem zu begegnen, ohne in sonst üblicher Weise durch die Innenwand des ausgehärteten Auskleidungsschlauchs 1 eine Vielzahl von Löchern in das sanierte Schachtbauwerk 150 zu bohren, in die jeweils Schraub-Dübelverbindungen eingesetzt werden, um den ausgehärteten Auskleidungsschlauch 1 mechanisch am Schachtbauwerk zu fixieren, besteht bei der Verwendung eines zuvor beschriebenen erfindungsgemäßen Auskleidungsschlauchs 1 die Möglichkeit, diesen mit geringem Aufwand und ohne nachträglich eingebrachte Löcher zusätzlich mechanisch zu fixieren. Hierdurch bleibt die Struktur des gehärteten Faserverbundwerkstoffs der Lage aus Fasermaterial 20 unbeschädigt, wodurch sichergestellt ist, dass das sanierte und gegen Auftrieb gesicherte Schachtbauwerk 150 auch nach Jahren noch die geforderten Dichtigkeitserfordernisse erfüllt.

Hierzu wird nach einem weiteren der Erfindung zugrunde liegenden Gedanken eine formschlüssige Verbindung zwischen dem alten Schachtbauwerk 100 und der ausgehärteten Lage aus Fasermaterial 20 des erfindungsgemäßen Auskleidungsschlauchs 1 erzeugt. Diese besitzt den Vorteil, dass der bei Kunstharzlaminaten in der Regel unvermeidbare Schrumpf nicht dazu führt, dass die damit einhergehende Verringerung des Außendurchmesser des ausgehärteten Auskleidungsschlauchs 1 eine zusätzliche Last auf eine nachfolgend noch näher beschriebene Klebeverbindung zwischen Auskleidungsschlauch 1 und Innenwand des Kanalschachts 100 ausübt, welche dazu führt, dass sich die Klebeverbindung bei einem Auftreten von Auftriebskräften leichter löst.

Nach einer ersten Ausführungsform wird hierzu vor der Sanierung des alten Schachtbauwerks 100 stellenweise oder umlaufend eine Nut in die Innenwand desselben gestemmt oder gefräst, sofern derartige Nuten nicht bereits zuvor schon zwischen den Betonringen des Schachtbauwerks 100 vorhanden sind. Da das Material des Auskleidungsschlauchs 1 sehr gut dehnbar ist und durch den Innendruck bei der Expansion vor der Aushärtung an die Innenwand des alten Schachtbauwerks 100 angedrückt wird, legt sich das Laminat in die vorbereitete und/oder vorhandene Nut, so dass nach der Aushärtung ein konkaver Formschluss entsteht. Hierbei bilden die in die Innenwand des alten Schachtbauwerks 100 eingebrachten Nuten Halteelemente 140, die eine konkave Ausbeulung 302 der Lage aus Fasermaterial 20 erzeugen, welche den mechanischen Formschluss bewirkt.

Ebenso ist es denkbar, vor der Sanierung des alten Schachtbauwerks 100 stellenweise oder umlaufend einen konvexen Formschluss über Haltemittel 141 vorzubereiten, die von der Innenwand des alten Schachtbauwerks 100 aus radial nach innen gerichtet sind und nach dem Aushärten des Fasermaterials der Lage 20 zu einer konvexen Ausbeulung 303 in diesem führen, wie dies durch das untere Halteelement 141 in Fig. 6 angedeutet ist.

Dazu werden entweder entsprechende vorgeformte Teile an die alte Kanalwand angeklebt oder angeschraubt, oder es werden zwischen die einzelnen Betonringe des alten Schachtbauwerks 100 entsprechend geformte Nägel mit großen Köpfen eingeschlagen, welche von der Innenwand des alten Schachtbauwerks 100 zum Zentrum hin nach innen gerichtet sind. Ebenso ist es denkbar, die Halteelemente 141 als eine umlaufende oder partielle Wulst auszuführen, die mittels Mörtel oder Kunstharz an der Innenwand des alten Schachtbauwerks 100 geformt und vor der Montage des Auskleidungsschlauchs 1 ausgehärtet wird. Denkbar ist es auch, dass Reste von alten Steigeisen, die vor der Sanierung sonst stets entfernt werden müssen, im Kanalschacht 100 verbleiben und in den Schacht hineinragen. Bei all diesen zuvor beschriebenen Ausführungsformen legt sich das besonders dehnbare Fasermaterial der Lage 20 des Auskleidungsschlauchs 1 vor dem Aushärten des Reaktionsharzes über diese konvexen Halteelemente 141 und bildet konvexe Ausbeulungen 303 die den Formschluss zwischen dem Fasermaterial und dem alten Schachtbauwerk 100 erzeugen.

Gleichzeitig oder alternativ kann eine in Fig. 6 angedeutete, im unteren Bereich des zylindrischen Teils 120 eingebrachte Verklebung 301 vorgesehen werden, um die Auftriebskräfte des ausgehärteten, nach außen abgedichteten Auskleidungsschlauchs 1 allein oder optional zusätzlich zu weiteren Maßnahmen mit abzutragen. Hierzu wird ein geeigneter Klebstoff, bevorzugt Epoxidharz- oder Polyurethanklebstoff, vor dem Absenken des Auskleidungsschlauchs 1 in den Kanalschacht 100 auf die Innenwand des unteren zweiten Schachtabschnitts 120 aufgetragen. Je nach Klebstoff muss dazu ggf. die äußere Folie des Außenfolienschlauchs 40 sowie vorhanden auch des weiteren Außenfolienschlauchs 50 entfernt werden. Durch das Expandieren des Auskleidungsschlauchs 1 mittels Druckluft, wird der Klebstoff in vorteilhafter Weise zu einer relativ dünnen Schicht verteilt und durch den anliegenden Druck auch in kleinste Rauigkeiten des alten Schachtbauwerks 100 gedrückt. Somit erhält man durch den Klebstoff nicht nur eine adhäsive Verbindung, sondern auch einen Formschluss über die Rauigkeit der Innenwand des alten Kanalschachtes 100.

### Bezugszeichenliste

- 1: Auskleidungsschlauch
- 6: Druckgasquelle
- 10: Innenfolienschlauch
- 10a: erster Umfangsabschnitt des Innenfolienschlauchs
- 10b: zweiter Umfangsabschnitt des Innenfolienschlauchs
- 12: Verbindungsabschnitt
- 13: Folienschlaufe
- 14: Sollbruchstelle
- 16: zu Schlauch geformte Flachfolie
- 16a: Randabschnitt
- 16b: Randabschnitt
- 17a: Längsrand
- 17b: Längsrand
- 18: aufgeschweißter Folienstreifen
- 20: radial aufweitetbare schlauchförmige Lage aus Fasermaterial
- 22: Faserband
- 30: Längszugband
- 40: Außenfolienschlauch
- 41: seitliche Schweißnaht des Außenfolienschlauchs
- 42a: erster Längsschlitz in Außenfolienschlauch
- 42b: zweiter Längsschlitz in Außenfolienschlauch
- 50: weiterer Außenfolienschlauch aus verstärktem zugfestem Werkstoff
- 60: weiterer Innenfolienschlauch
- 62: Dichtelement/ Schnur
- 64: Luftsack
- 70: erstes unteres Ende der Lage aus Fasermaterial
- 72: Naht
- 80: Gleitmittel
- 100: Kanalschacht
- 110: erster Schachtabschnitt
- 115: konischer Teil
- 120: zweiter Schachtabschnitt
- 130: Berme
- 131: Gerinne
- 140: Konkave Halteelemente
- 141: Konvexe Halteelemente
- 150: saniertes Schachtbauwerk
- 160: Grundwasserspiegel
- 200: Packer
- 301: Verklebung
- 302: konkave Ausbeulung der Lage aus Fasermaterial
- 303: konvexe Ausbeulung der Lage aus Fasermaterial
- L: Längsachse des Auskleidungsschlauchs

## Patentansprüche

1. Auskleidungsschlauch (1) zur Sanierung eines defekten Kanalschachts (100), der einen ersten Schachtabschnitt (110) mit einem ersten Durchmesser und einen sich daran anschließenden zweiten Schachtabschnitt (120) mit einem erweiterten Durchmesser sowie eine Berme und ein Gerinne aufweist, umfassend einen Innenfolienschlauch (10) sowie eine um diesen herum angeordnete, radial aufweitbare schlauchförmige Lage aus Fasermaterial (20), welches mit einem härtbaren Reaktionsharz getränkt ist, wobei der Innenfolienschlauch (10) einen sich in Längsrichtung desselben erstreckenden Verbindungsabschnitt (12) aufweist, welcher zwei parallel zueinander verlaufende Umfangsabschnitte (10a), (10b) des Innenfolienschlauchs (10) zu einem umfänglich geschlossenen Innenfolienschlauch (10) mit einem definierten Nenndurchmesser verbindet, und der Verbindungsabschnitt (12) eine sich entlang des Innenfolienschlauchs (10) erstreckende Sollbruchstelle (14) besitzt, die durch Einbringen eines Druckmediums in den Innenfolienschlauch in Umfangsrichtung auftrennbar ist, um den Innenfolienschlauch (10) und die darauf angeordnete Lage aus Fasermaterial (20) radial über den Nenndurchmesser hinaus aufzuweiten, **dadurch gekennzeichnet, dass**
die radial aufweitbare schlauchförmige Lage aus Fasermaterial (20) an einem ersten, in das Gerinne des Kanalschachts (100) einführbaren Ende (70) durch eine Naht (72) verschlossen ist, die sich orthogonal zur Längsachse (L) der schlauchförmigen Lage aus Fasermaterial (20) erstreckt.

2. Auskleidungsschlauch nach Anspruch 1,
**dadurch gekennzeichnet,**
**dass** um die Lage aus Fasermaterial (20) ein Außenfolienschlauch (40) angeordnet ist, der einen ersten, an einem ersten Ende der Naht (72) entspringenden ersten Längsschlitz (42a) sowie einen am zweiten Ende der Naht (72) entspringenden zweiten Längsschlitz (42b) umfasst, die sich bevorzugt parallel zur zentralen Längsachse (L) der schlauchförmigen Lage aus Fasermaterial (20) erstrecken.

3. Auskleidungsschlauch nach Anspruch 2,
**dadurch gekennzeichnet,**
**dass** der erste Längsschlitz (42a) und der zweite Längsschlitz (42b) jeweils eine Länge besitzt, die bevorzugt im Wesentlichen der Breite der Berme (130) zuzüglich der Hälfe der Abwicklung der Innenwandfläche des Gerinnes (131) entspricht.

4. Auskleidungsschlauch nach Anspruch 2 oder 3,
**dadurch gekennzeichnet,**
**dass** zwischen der Innenseite des Außenfolienschlauchs (40) und einem zwischen dem ersten und zweiten Längsschlitz (42a, 42b) aufgespannten Außenabschnitt der schlauchförmigen Lage aus Fasermaterial (20) ein Gleitmittel (80), bevorzugt Silikonöl, aufgebracht ist, um die Reibung zwischen der Innenseite des Außenfolienschlauchs (40) und der Außenseite der schlauchförmigen Lage aus Fasermaterial (20) zur Vermeidung von Falten in den Übergangsbereichen zwischen der Innenwand des Kanalschachts (100) und der Berme (130) und/oder der Berme (130) und dem Gerinne (131) beim Expandieren des Auskleidungsschlauchs (1) mittels eingebrachter Druckluft zu vermindern.

5. Auskleidungsschlauch nach einem der vorhergehenden Ansprüche,
**dadurch gekennzeichnet,**
**dass** die schlauchförmige, radial aufweitbare Lage aus Fasermaterial (20) wenigstens ein schraubenförmig überlappend gewickeltes Faserband (22) oder wenigstens ein sich in Längsrichtung des Auskleidungsschlauchs (1) erstreckendes, an seinen Längsrändern überlappend gelegtes Faserband (22) umfasst, dessen Fasermaterial eine Dehnbarkeit von mehr als 10 % besitzt, derart, dass die schlauchförmige Lage (20) aus Fasermaterial durch Einleiten eines Druckmediums in den Innenraum des Auskleidungsschlauchs (1) radial von einem ersten Durchmesser auf einen zweiten Durchmesser vergrößerbar ist, dessen Größe die Größe des ersten Durchmessers um wenigstens 10 %, insbesondere mehr als 30 %, übersteigt.

6. Auskleidungsschlauch nach einem der vorhergehenden Ansprüche,
**dadurch gekennzeichnet,**
**dass** innerhalb des Innenfolienschlauchs (10) ein sich in Längsrichtung des Auskleidungsschlauchs (1) über dessen gesamte Länge hinweg erstreckender weiterer Innenfolienschlauch (60) aus einem luftdichten transparenten Kunststoffmaterial angeordnet ist, dessen eines Ende durch ein Dichtelement (62), insbesondere einen Knoten oder eine um die Außenseite des weiteren Innenfolienschlauchs herum gewickelte Schnur oder einen Kabelbinder, zur Bildung eines einseitig geschlossenen Luftsacks (64), luftdicht verschließbar ist, welcher innerhalb der durch die Naht (72) endseitig verschlossenen, radial aufweitbaren schlauchförmigen Lage aus Fasermaterial (20) angeordnet ist.

7. Verfahren zu Herstellung eines Auskleidungsschlauch (1) nach einem der vorhergehenden Ansprüche,
**gekennzeichnet durch** die folgenden Verfahrensschritte:
Formen einer transparenten Kunststoff-Flachfolie (16) zu einem umfänglich geschlossenen Innenfolienschlauch (10) mit einem vorgegebenen Nenndurchmesser durch überlappendes Verkleben oder Verschweißen der Längsränder (17a, 17b) der transparenten Kunststoff-Flachfolie (16) und/oder durch Aufkleben oder thermisches Aufschweißen eines transparenten Folienstreifens (18) auf zwei benachbarte außenliegende parallel zueinander verlaufenden Umfangsabschnitte (10a), (10b) der schlauchförmig angeordneten Kunststoff-Flachfolie (16) unter Erzeugung eines Verbindungsabschnitts (12), welcher eine in Längsrichtung des Innenfolienschlauchs (10) verlaufende Sollbruchstelle (14) aufweist, und Anordnen einer radial aufweitbaren schlauchförmigen Lage aus Fasermaterial (20) auf der Außenseite des umfänglich geschlossenen schlauchförmigen Innenfolienschlauchs (10) durch überlappendes schraubenförmiges Wickeln oder überlappendes Legen von wenigsten einem harzgetränkten Faserband (22), insbesondere Glasfaserband, um den Innenfolienschlauch (10) herum, sowie Verschließen des ersten unteren Endes (70) der Lage aus Fasermaterial (20) durch eine Naht (72), die sich orthogonal zur Längsachse (L) der schlauchförmigen, radial aufweitbaren Lage aus Fasermaterial (20) erstreckt.

8. Verfahren nach Anspruch 7,
**gekennzeichnet durch** die weiteren Verfahrensschritte:
Anordnen eines Außenfolienschlauchs (40) um die schlauchförmige, radial aufweitbare Lage aus Fasermaterial (20) und Einbringen eines an einem ersten Ende der Naht (72) entspringenden ersten Längsschlitzes (42a) sowie eines an einem zweiten Ende der Naht (72) entspringenden zweiten Längsschlitzes (42b) in den Außenfolienschlauch (40), welche sich bevorzugt parallel zur zentralen Längsachse (L) der schlauchfönnigen, radial aufweitbaren Lage aus Fasermaterial (20) erstrecken.

9. Verfahren nach Anspruch 7,
**gekennzeichnet durch** den weiteren Verfahrensschritt:
Einbringen von Gleitmittel (80) zwischen der Innenseite des Außenfolienschlauchs (40) und einem zwischen dem ersten und zweiten Längsschlitz (42a, 42b) aufgespannten Außenabschnitt der schlauchförmigen Lage aus Fasermaterial (20).

10. Verfahren zum Auskleiden eines defekten Kanalschachts (100), der einen ersten Schachtabschnitt (110) mit einem ersten Durchmesser und einen sich daran anschließenden zweiten Schachtabschnitt (120) mit einem erweiterten Durchmesser sowie eine Berme (130) und ein Gerinne (131) unterhalb des zweiten Schachtabschnitts (120) aufweist,
**gekennzeichnet durch** die folgenden Verfahrensschritte:
Befestigen des einen Endes eines Auskleidungsschlauchs (1) nach einem der Ansprüche 1 bis 6 an einem topfförmigen Packer (200),
Anheben des Packers (200) mit dem daran befestigten Auskleidungsschlauch (1) in eine vertikale Position oberhalb des Kanalschachts (100) derart, dass sich die Naht (72) am unteren Ende des Auskleidungsschlauchs (1) befindet, Ausrichten der Naht (72) entlang des Gerinnes (131) des Kanalschachts (100), Ausrichten des durch die Naht (72) verschlossenen Endes des Auskleidungsschlauchs, bis die Naht (72) parallel zur Längsrichtung des Gerinnes (131) verläuft und Absenken des Packers (200) mit dem daran befestigten Auskleidungsschlauch (1) in den Kanalschacht (100) bis die Naht (72) im Gerinne (131) zu liegen kommt sowie, Expandieren eines im Bereich des Bodens des Kanalschachts (100) luftdicht verschlossenen Luftsacks (64) im Inneren des Auskleidungsschlauchs (1) durch Einleiten eines Druckmediums, insbesondere Druckluft, in den Luftsack (64), derart, dass sich der Auskleidungsschlauch (1) im Inneren des Kanalschachts (100) unter Auftrennung der Sollbruchstelle (14) im Verbindungsabschnitt (12) radial aufweitet und an die Innenwand des erweiterten zweiten Kanalabschnitts (120) sowie an die Berme (130) und das Gerinne (131) anlegt, und Aushärten des Reaktionsharzes in der Lage (20) aus Fasermaterial durch Einbringen einer Strahlungsquelle oder von Heißdampf oder Heißwasser in den Innenraum des im Auskleidungsschlauch (1) angeordneten expandierten Luftsacks (64).

11. Verfahren nach Anspruch 10,
**dadurch gekennzeichnet,**
**dass** der erste und zweite Längsschlitz (42a, 42b) in den Außenfolienschlauch (40) eingebracht werden, wenn sich dieser nach dem Anheben des Packers (200) in einer vertikalen Position oberhalb des Kanalschachts (100) befindet.

12. Verfahren nach Anspruch 11,
**dadurch gekennzeichnet,**
**dass** nach dem Einbringen des ersten und zweiten Längsschlitzes (42a, 42b) in den Außenfolienschlauch (40) die geschlitzten Abschnitte des Außenfolienschlauchs (40) in Aufwärtsrichtung umgeschlagen werden, im Anschluss daran auf die unbedeckten Bereiche der Außenseite der Lage aus Fasermaterial (20) ein Gleitmittel (80) aufgebracht wird, und dass im Anschluss daran die geschlitzten Abschnitte des Außenfolienschlauchs (40) wieder zurück auf die mit Gleitmittel (80) versehene Außenseite der radial aufweitbaren Lage aus Fasermaterial (20) zurückgeschlagen werden.

13. Verfahren nach einem der Ansprüche 10 bis 12,
**dadurch gekennzeichnet,**
**dass** vor dem Absenken des Auskleidungsschlauchs (1) in den Kanalschacht (100) an der Innenwand des ersten und/oder zweiten Schachtabschnitts (110, 120) Halteelemente (140, 141), insbesondere Blöcke und/oder gekürzte Steigeisen und/oder Nuten vorgesehen werden, welche nach dem vollständigen Absenken des Auskleidungsschlauchs (1) in den Kanalschacht (100) von der Außenseite des Außenfolienschlauchs (1) und dem darin angeordneten Fasermaterial unter Erzeugung einer lokalen radialen Ausbeulung (302, 303) des Fasermaterial überdeckt werden, wobei die lokalen radialen Ausbeulungen (302, 303) des Fasermaterials die Halteelemente (140, 141) nach dem Expandieren und Aushärten des Auskleidungsschlauchs (1) formschlüssig hintergreifen und den Auskleidungsschlauch im Kanalschacht (100) mechanisch fixieren.

## Claims

1. Lining tube (1) for restoring a defective sewer shaft (100), which has a first shaft portion (110) having a first diameter and an adjacent second shaft portion (120) having an expanded diameter and a berm and a channel, comprising an inner film tube (10) and a tubular layer, which is arranged around it and which can be radially expanded, of fibre material (20) and which is impregnated with a curable reaction resin, wherein the inner film tube (10) has a connection portion (12) which extends in the longitudinal direction thereof, and which connects two circumferential portions (10a), (10b) of the inner film tube (10) which extend parallel with each other to form a circumferentially closed inner film tube(10) having a defined nominal diameter, and the connection portion (12) has a desired breaking location (14) which extends along the inner film tube (10) and which can be separated by introducing a pressurized medium into the inner film tube in a circumferential direction in order to expand the inner film tube (10) and the layer of fibre material (20) which is arranged thereon radially over the nominal diameter,
**characterized in that**
the radially expandable tubular layer of fibre material (20) is closed at a first end (70) which can be introduced into the channel of the sewer shaft (100) by means of a seam (72) which extends orthogonally with respect to the longitudinal axis (L) of the tubular layer of fibre material (20).

2. Lining tube according to Claim 1,
**characterized in that**
around the layer of fibre material (20) there is arranged an outer film tube (40) which comprises a first longitudinal slot (42a) which rises at a first end of the seam (72) and a second longitudinal slot (42b) which rises at the second end of the seam (72), which preferably extend parallel with the longitudinal centre axis (L) of the tubular layer of fibre material (20).

3. Lining tube according to Claim 2,
**characterized in that**
the first longitudinal slot (42a) and the second longitudinal slot (42b) each have a length which preferably substantially corresponds to the width of the berm (130) plus half the developed view of the inner wall face of the channel (131).

4. Lining tube according to Claim 2 or 3,
**characterized in that**
between the inner side of the outer film tube (40) and an outer portion, which is defined between the first and second longitudinal slot (42a, 42b), of the tubular layer of fibre material (20), a lubricant (80), preferably silicone oil, is applied in order to reduce the friction between the inner side of the outer film tube (40) and the outer side of the tubular layer of fibre material (20) in order to prevent folds in the transition regions between the inner wall of the sewer shaft (100) and the berm (130) and/or the berm (130) and the channel (131) during expansion of the lining tube (1) by means of compressed air which is introduced.

5. Lining tube according to one of the preceding claims,
**characterized in that**
the tubular, radially expandable layer of fibre material (20) comprises at least one fibre tape (22) which is wound in a helically overlapping manner or at least one fibre tape (22) which extends in the longitudinal direction of the lining tube (1) and which is placed in an overlapping manner at the longitudinal edges thereof and the fibre material of which has an expandability of more than 10% so that the tubular layer (20) of fibre material by introducing a pressurized medium into the interior of the lining tube (1) can be radially increased from a first diameter to a second diameter, the size of which exceeds the size of the first diameter by at least 10%, in particular more than 30%.

6. Lining tube according to one of the preceding claims,
**characterized in that**
within the inner film tube (10) there is arranged an additional inner film tube (60) made of an air-tight transparent plastics material and which extends in the longitudinal direction of the lining tube (1) over the entire length thereof and one end of which can be closed in an air-tight manner by means of a sealing element (62), in particular a knot or a cord which is wound around the outer side of the additional inner film tube or a cable tie in order to form an air bag (64) which is closed at one side and which is arranged within the tubular layer of fibre material (20) which is closed by the seam (72) at the end side and which can be radially expanded.

7. Method for producing a lining tube (1) according to one of the preceding claims,
**characterized by** the following method steps:
shaping a transparent plastics material flat film (16) to form a circumferentially closed inner film tube (10) having a predetermined nominal diameter by means of overlapping adhesive bonding or welding of the longitudinal edges (17a, 17b) of the transparent plastics material flat film (16) and/or by adhesive bonding or thermally welding a transparent film strip (18) on two adjacent outer circumferential portions (10a), (10b) which extend parallel with each other of the plastics material flat film (16) which is arranged in a tubular manner with a connection portion (12) which has a desired breaking location (14) which extends in the longitudinal direction of the inner film tube (10) being produced, and arranging a radially expandable tubular layer of fibre material (20) on the outer side of the circumferentially closed tubular inner film tube (10) by means of overlapping helical winding or overlapping placement of at least one resin-impregnated fibre tape (22), in particular glass fibre tape around the inner film tube (10), and closing the first lower end (70) of the layer of fibre material (20) by means of a seam (72), which extends orthogonally with respect to the longitudinal axis (L) of the tubular, radially expandable layer of fibre material (20).

8. Method according to Claim 7,
**characterized by** the additional method steps of:
arranging an outer film tube (40) around the tubular, radially expandable layer of fibre material (20) and introducing a first longitudinal slot (42a) which rises at a first end of the seam (72) and a second longitudinal slot (42b) which rises at a second end of the seam (72) into the outer film tube (40) which preferably extend parallel with the longitudinal centre axis (L) of the tubular, radially expandable layer of fibre material (20).

9. Method according to Claim 7,
**characterized by** the additional method step of:
introducing lubricant (80) between the inner side of the outer film tube (40) and an outer portion, which is defined between the first and the second longitudinal slot (42a, 42b), of the tubular layer of fibre material (20).

10. Method for lining a defective sewer shaft (100), which has a first shaft portion (110) having a first diameter and an adjacent second shaft portion (120) having an expanded diameter and a berm (130) and a channel (131) below the second shaft portion (120), **characterized by** the following method steps:
securing one end of a lining tube (1) according to one of Claims 1 to 6 to a pot-like packer (200),
lifting the packer (200) with the lining tube (1) secured thereto into a vertical position above the sewer shaft (100) in such a manner that the seam (72) is located at the lower end of the lining tube (1), orientating the seam (72) along the channel (131) of the sewer shaft (100), orientating the end, which is closed by the seam (72), of the lining tube until the seam (72) extends parallel with the longitudinal direction of the channel (131) and lowering the packer (200) with the lining tube (1) secured thereto into the sewer shaft (100) until the seam (72) comes to rest in the channel (131) and expanding an air bag (64) which is closed in an air-tight manner in the region of the base of the sewer shaft (100) inside the lining tube (1) by introducing a pressurized medium, in particular compressed air, into the air bag (64) in such a manner that the lining tube (1) radially expands inside the sewer shaft (100) with the desired breaking location (14) being separated in the connection portion (12) and bears on the inner wall of the expanded second sewer portion (120) and on the berm (130) and the channel (131), and curing the reaction resin in the layer (20) of fibre material by introducing a radiation source or hot vapour or hot water into the interior of the expanded air bag (64) which is arranged in the lining tube (1).

11. Method according to Claim 10,
**characterized in that**
the first and second longitudinal slots (42a, 42b) are introduced into the outer film tube (40) when it is located in a vertical position above the sewer shaft (100) after the packer (200) has been raised.

12. Method according to Claim 11,
**characterized in that**
after the first and second longitudinal slots (42a, 42b) have been introduced into the outer film tube (40), the slotted portions of the outer film tube (40) are folded over in an upward direction, a lubricant (80) is subsequently applied to the uncovered regions of the outer side of the layer of fibre material (20), and **in that** afterwards the slotted portions of the outer film tube (40) are folded back again onto the outer side, which is provided with lubricant (80), of the radially expandable layer of fibre material (20).

13. Method according to one of Claims 10 to 12,
**characterized in that**
prior to the lining tube (1) being lowered into the sewer shaft (100), there are provided on the inner wall of the first and/or second shaft portion (110, 120) retention elements (140, 141), in particular blocks and/or shortened rungs and/or grooves which after the lining tube (1) has been completely lowered into the sewer shaft (100) are covered by the outer side of the outer film tube (1) and the fibre material which is arranged therein with a local radial bulge (302, 303) of the fibre material being produced, wherein the local radial bulges (302, 303) of the fibre material engage behind the retention elements (140, 141) after the expansion and curing of the lining tube (1) in a positive-locking manner and mechanically fix the lining tube in the sewer shaft (100).

## Revendications

1. Tuyau flexible de revêtement (1) de remise en état d'un canal d'égout (100) défectueux, qui comporte un premier tronçon (110) de regard avec un premier diamètre et un second tronçon (120) de regard, se raccordant à celui-ci, avec un diamètre élargi ainsi qu'une berme et une rigole, comprenant un tuyau flexible de film intérieur (10) ainsi qu'une couche tubulaire, disposée tout autour de celui-ci, expansible radialement, en matériau fibreux (20), lequel est imprégné d'une résine de réaction durcissable, le tuyau flexible de film intérieur (10) comportant un tronçon de liaison (12) s'étendant dans la direction longitudinale de celui-ci, lequel relie deux tronçons périphériques (10a), (10b) s'étendant parallèlement l'un par rapport à l'autre du tuyau flexible de film intérieur (10) en un tuyau flexible de film intérieur (10) fermé en périphérie avec un diamètre nominal défini, et le tronçon de liaison (12) possédant un point de rupture théorique (14) s'étendant le long du tuyau flexible de film intérieur (10), qui peut être séparé dans la direction périphérique par l'introduction d'un milieu sous pression dans le tuyau flexible de film intérieur pour élargir le tuyau de film intérieur (10) et la couche en matériau fibreux (20) disposée sur celui-ci radialement au-delà du diamètre nominal,
**caractérisé en ce que**
la couche tubulaire en matériau fibreux (20) expansible radialement est fermée sur une première extrémité (70) pouvant être introduite dans la rigole du regard d'égout (100) par un joint (72), qui s'étend orthogonalement par rapport à l'axe longitudinal (L) de la couche tubulaire en matériau fibreux (20).

2. Tuyau flexible de revêtement selon la revendication 1,
**caractérisé en ce**
**qu'**est disposé autour de la couche en matériau fibreux (20) un tuyau flexible de film extérieur (40), qui comprend une première entaille longitudinale (42a) dépassant sur une première extrémité du joint (72) ainsi qu'une seconde entaille longitudinale (42b) dépassant sur la seconde extrémité du joint (72), qui s'étendent de manière préférée parallèlement à l'axe longitudinal (L) central de la couche tubulaire en matériau fibreux (20).

3. Tuyau flexible de revêtement selon la revendication 2,
**caractérisé en ce**
**que** la première entaille longitudinale (42a) et la seconde entaille longitudinale (42b) possèdent chacune une longueur qui correspond de manière préférée sensiblement à la largeur de la berme (130) majorée de la moitié du développement de la surface de paroi intérieure de la rigole (131).

4. Tuyau flexible de revêtement selon la revendication 2 ou 3,
**caractérisé en ce**
**qu'**est installé entre le côté intérieur du tuyau flexible de film extérieur (40) et un tronçon extérieur, formé entre la première et la seconde entaille longitudinale (42a, 42b), de la couche tubulaire en matériau fibreux (20), un lubrifiant (80), de manière préférée de l'huile de silicone pour réduire le frottement entre le côté intérieur du tuyau flexible de film extérieur (40) et le côté extérieur de la couche tubulaire en matériau fibreux (20) pour éviter l'apparition de plis dans les zones de transition entre la paroi intérieure du regard d'égout (100) et la berme (130) et/ou la berme (130) et la rigole (131) lors de l'expansion du tuyau flexible de revêtement (1) au moyen d'air comprimé introduit.

5. Tuyau flexible de revêtement selon l'une des revendications précédentes,
**caractérisé en ce**
**que** la couche tubulaire en matériau fibreux (20) expansible radialement comprend au moins une bande de fibres (22) enroulée avec chevauchement hélicoïdalement ou au moins une bande de fibres (22) s'étendant dans la direction longitudinale du tuyau flexible de revêtement (1), placée avec chevauchement sur les bords longitudinaux de celui-ci, dont le matériau fibreux possède une ductilité supérieure à 10 % de telle manière que la couche (20) tubulaire en matériau fibreux peut être agrandie, par l'introduction d'un milieu sous pression dans l'espace intérieur du tuyau flexible de revêtement (1), radialement d'un premier diamètre sur un deuxième diamètre, dont la dimension dépasse la dimension du premier diamètre d'au moins 10 %, en particulier de plus de 30 %.

6. Tuyau flexible de revêtement selon l'une des revendications précédentes,
**caractérisé en ce**
**qu'**est disposé à l'intérieur du tuyau flexible de film intérieur (10) un tuyau flexible de film intérieur supplémentaire (60) s'étendant dans la direction longitudinale du tuyau flexible de revêtement (1) au-delà de la totalité de la longueur de celui-ci, composé d'un matériau en matière plastique transparent étanche à l'air, dont une extrémité peut être fermée de manière étanche à l'air par un élément d'étanchéité (62), en particulier un nœud ou une corde enroulée tout autour du côté extérieur du tuyau flexible de film intérieur supplémentaire ou une attache de câble, pour former un coussin d'air (64) fermé d'un côté, lequel est disposé à l'intérieur de la couche tubulaire en matériau fibreux (20) fermée d'un côté par le joint (72), expansible radialement.

7. Procédé de fabrication d'un tuyau flexible de revêtement (1) selon l'une des revendications précédentes,
**caractérisé par** les étapes de procédé suivantes :
le façonnage d'un film plat en matière plastique (16) transparent en un tuyau flexible de film intérieur (10) fermé en périphérie avec un diamètre nominal prédéfini en collant ou en soudant avec chevauchement les bords longitudinaux (17a, 17b) du film plat en matière plastique (16) transparent et/ou en appliquant par collage ou soudage thermique un ruban de film (18) transparent sur deux tronçons périphériques (10a), (10b) adjacents situés à l'extérieur s'étendant parallèlement l'un par rapport à l'autre du film plat en matière plastique (16) disposé de manière tubulaire tout en produisant un tronçon de liaison (12), lequel comporte un point de rupture théorique (14) s'étendant dans la direction longitudinale du tuyau flexible de film intérieur (10) et la disposition d'une couche tubulaire en matériau fibreux (20) expansible radialement sur le côté extérieur du tuyau flexible de film intérieur (10) tubulaire fermé en périphérie en enroulant hélicoïdalement avec chevauchement ou en plaçant avec chevauchement au moins une bande de fibres (22) imprégnée de résine, en particulier une bande de fibres de verre, tout autour du tuyau flexible de film intérieur (10), et la fermeture de la première extrémité inférieure (70) de la couche en matériau fibreux (20) par un joint (72), qui s'étend orthogonalement par rapport à l'axe longitudinal (L) de la couche tubulaire en matériau fibreux (20) expansible radialement.

8. Procédé selon la revendication 7,
**caractérisé par** les étapes de procédé supplémentaires :
de disposition d'un tuyau flexible de film extérieur (40) autour de la couche tubulaire en matériau fibreux (20) expansible radialement et d'introduction d'une première entaille longitudinale (42a) dépassant sur une première extrémité du joint (72) et d'une seconde entaille longitudinale (42b) dépassant sur une seconde extrémité du joint (72) dans le tuyau flexible de film extérieur (40), lesquelles s'étendent de manière préférée parallèlement à l'axe longitudinal (L) central de la couche tubulaire en matériau fibreux (20) expansible radialement.

9. Procédé selon la revendication 7,
**caractérisé par** l'étape de procédé supplémentaire :
d'introduction de lubrifiant (80) entre le côté intérieur du tuyau flexible de film extérieur (40) et un tronçon extérieur, formé entre la première et la seconde entaille longitudinale (42a, 42b) de la couche tubulaire en matériau fibreux (20).

10. Procédé de revêtement d'un regard d'égout (100) défectueux, qui comporte un premier tronçon (110) de regard avec un premier diamètre et un second tronçon (120) de regard se raccordant à celui-ci avec un diamètre élargi ainsi qu'une berme (130) et une rigole (131) à l'intérieur du second tronçon (120) de regard,
**caractérisé par** les étapes de procédé suivantes :
de fixation d'une extrémité du tuyau flexible de revêtement (1) selon l'une des revendications 1 à 6 sur une garniture d'étanchéité (200) en forme de pot,
de soulèvement de la garniture d'étanchéité (200) avec le tuyau flexible de revêtement (1) fixé sur celle-ci dans une position verticale au-dessus du regard d'égout (100) de telle manière que le joint (72) se trouve sur l'extrémité inférieure du tuyau flexible de revêtement (1), d'orientation du joint (72) le long de la rigole (131) du regard d'égout (100), d'orientation de l'extrémité du tuyau flexible de revêtement fermée par le joint (72) jusqu'à ce que le joint (72) s'étende parallèlement à la direction longitudinale de la rigole (131), et d'abaissement de la garniture d'étanchéité (200) avec le tuyau flexible de revêtement (1) fixé sur celle-ci dans le regard d'égout (100) jusqu'à ce que le joint (72) parvienne dans la rigole (131) et d'expansion d'un coussin d'air (64) fermé de manière étanche à l'air dans la zone du fond du regard d'égout (100) à l'intérieur du tuyau flexible de revêtement (1) en introduisant un milieu sous pression, en particulier de l'air comprimé, dans le coussin d'air (64) de telle manière que le tuyau flexible de revêtement (1) s'expanse radialement à l'intérieur du regard d'égout (100) en séparant le point de rupture théorique (14) dans le tronçon de liaison (12) et se place sur la paroi intérieure du second tronçon (120) de regard élargi ainsi que sur la berme (130) et la rigole (131), et de durcissement de la résine de réaction dans la couche (20) en matériau fibreux en introduisant une source de rayonnement ou de la vapeur très chaude ou de l'eau très chaude dans l'espace intérieur du coussin d'air (64) expansé disposé dans le tuyau flexible de revêtement (1).

11. Procédé selon la revendication 10,
**caractérisé en ce**
**que** la première et la seconde entaille longitudinale (42a, 42b) sont introduites dans le tuyau flexible de film extérieur (40) lorsque celui-ci se trouve après le soulèvement de la garniture d'étanchéité (200) dans une position verticale au-dessus du regard d'égout (100).

12. Procédé selon la revendication 11,
**caractérisé en ce**
**qu'**après l'introduction de la première et de la seconde entaille longitudinale (42a, 42b) dans le tuyau flexible de film extérieur (40), les tronçons entaillés du tuyau flexible de film extérieur (40) sont repliés dans la direction vers le haut, puis un lubrifiant (80) est appliqué sur les zones non recouvertes du côté extérieur de la couche en matériau fibreux (20), et qu'ensuite les tronçons entaillés du tuyau flexible de film extérieur (40) sont repliés à nouveau sur le côté extérieur, pourvu de lubrifiant (80), de la couche en matériau fibreux (20) expansible radialement.

13. Procédé selon l'une des revendications 10 à 12, **caractérisé en ce**
**qu'**avant l'abaissement du tuyau flexible de revêtement (1) dans le regard d'égout (100) sur la paroi intérieure du premier et/ou du second tronçon (110, 120) de regard, des éléments de maintien (140, 141), en particulier des blocs et/ou des crampons raccourcis et/ou des rainures sont prévus, lesquels sont recouverts, après l'abaissement complet du tuyau flexible de revêtement (1) dans le regard d'égout (100), par le côté extérieur du tuyau flexible de film extérieur (1) et le matériau fibreux disposé à l'intérieur tout en produisant une protubérance (302, 303) radiale locale du matériau fibreux, les protubérances (302, 303) radiales locales du matériau fibreux venant en prise par l'arrière par complémentarité de forme avec les éléments de maintien (140, 141) après l'expansion et le durcissement du tuyau flexible de revêtement (1) et bloquant mécaniquement le tuyau flexible de revêtement dans le regard d'égout (100).
